# EUROPEAN PATENT APPLICATION

(11) **EP 4 813 656 A1**
(43) Date of publication of application: **30.09.2026**
(21) Application number: 26166655.6
(22) Date of filing: 23.03.2026
(51) Int. Cl.: B41J 2/21, B41J 19/14, G06K 15/02, B41J 11/00

(54) **PRINT SYSTEM AND CONTROL METHOD THEREOF**

(30) Priority: 24.03.2025 JP 2025048458
(71) Applicant: Seiko Epson Corporation, Tokyo 160-8801 (JP)
(72) Inventor: MATSUMURA, Tetsuya, Suwa-shi, 392-8502 (JP)
(74) Representative: Lewis Silkin LLP

(57) **Abstract**

A print system includes: a recording head configured to eject a liquid droplet for forming a print image onto a medium; a drive unit configured to change a relative positional relationship between the recording head and the medium; a read unit configured to read a state of the liquid droplet landed on the medium in a reading range; a control unit configured to control ejection of the liquid droplet from the recording head and execute processing based on a reading result of the read unit; a holding unit configured to receive vibration transmitted to the medium; and a reference marker adding unit provided at the holding unit and configured to display information indicating whether a reference marker falls within the reading range, the reference marker indicating a reference of a landing position of the liquid droplet onto the medium, in which the control unit executes the processing with the reference marker included in the reading result as the reference of the landing position.

## Description

The present application is based on, and claims priority from JP Application Serial Number 2025-048458, filed March 24, 2025, the disclosure of which is hereby incorporated by reference herein in its entirety.

### BACKGROUND

### 1. Technical Field

The present disclosure relates to a print system that forms a print image with liquid droplets ejected from a recording head onto a medium, and a control method thereof.

### 2. Related Art

An inkjet printer that forms a print image with liquid droplets ejected from a recording head to a medium is known as a print apparatus. In order to achieve printing with high accuracy, it is necessary to manage landing positions of liquid droplets. For example, when the inkjet printer performs main scanning and sub scanning, in order to achieve highly accurate bidirectional printing, it is necessary to perform Bi-d adjustment (bidirectional adjustment) of aligning landing positions of ink liquid droplets in a forward path and a backward path. In order to achieve highly accurate sub scanning, paper feeding adjustment is necessary. It is necessary to adjust a density for a print image.

The inkjet printer disclosed in JP-A-2006-264194 forms a test pattern on a recording medium in order to prevent unevenness of a print image caused by variation in an amount of ink ejected from a recording head or deviation of a landing position. The inkjet printer reads a test pattern using a read sensor provided on a carriage and creates correction data, thereby executing recording without depending on nozzle features or the like of each recording head.

JP-A-2006-264194 is an example of the related art.

In order to form the test pattern, ink and a medium are separately required, and there is a time during which a user cannot print an image desired to be printed, that is, downtime. However, during printing, relative vibration may occur between a recording medium and the read sensor due to an operation of the carriage or the like. Therefore, when a print image is read by the read sensor during printing, reading accuracy of the print image may decrease.

### SUMMARY

According to an aspect of the present disclosure, there is provided a print system including:
a recording head configured to eject a liquid droplet for forming a print image onto a medium;
a drive unit configured to change a relative positional relationship between the recording head and the medium;
a read unit configured to read a state of the liquid droplet landed on the medium in a reading range;
a control unit configured to control ejection of the liquid droplet from the recording head and execute processing based on a reading result of the read unit;
a holding unit configured to receive vibration transmitted to the medium; and
a reference marker adding unit provided at the holding unit and configured to display information indicating whether a reference marker falls within the reading range, the reference marker indicating a reference of a landing position of the liquid droplet onto the medium, in which
the control unit executes the processing with the reference marker included in the reading result as the reference of the landing position.

According to another aspect of the present disclosure, there is provided a control method of a print system,
the print system including
   a recording head configured to eject a liquid droplet for forming a print image onto a medium,
   a drive unit configured to change a relative positional relationship between the recording head and the medium, and
   a read unit configured to read a state of the liquid droplet landed on the medium in a reading range,
the print system being configured to control ejection of the liquid droplet from the recording head and execute processing based on a reading result of the read unit,
the print system further including
   a holding unit configured to receive vibration transmitted to the medium, and
   a reference marker adding unit provided at the holding unit and configured to display information indicating whether a reference marker falls within the reading range, the reference marker indicating a reference of a landing position of the liquid droplet onto the medium,
the control method including:
   acquiring the reading result including the reference marker; and
   executing the processing with the reference marker included in the reading result as the reference of the landing position.

### BRIEF DESCRIPTION OF THE DRAWINGS

FIG. 1 is a diagram schematically illustrating an example of a print system.
FIG. 2 is a diagram schematically illustrating an example of a recording head and a landing mark portion.
FIG. 3 is a diagram schematically illustrating an example of forming a print image by repeating main scanning and sub scanning.
FIG. 4 is a diagram schematically illustrating an example of dot arrangement until a print image is formed in an overlapping region.
FIG. 5 is a diagram schematically illustrating an example of dot arrangement until a print image is formed in an overlapping region.
FIG. 6 is a diagram schematically illustrating a first specific example of the print system including a reference marker adding unit and a holding unit.
FIG. 7 is a plan view schematically illustrating the first specific example of the print system including the reference marker adding unit and a roller holding unit, the reference marker adding unit including a reference marker present in a reading range including dots.
FIG. 8 is a diagram schematically illustrating an example of a reading result including dots and reference markers.
FIG. 9 is a flowchart schematically illustrating an example of printer adjustment processing.
FIG. 10 is a diagram schematically illustrating an example of processing based on a state of a landing mark portion.
FIG. 11 is a diagram schematically illustrating a second specific example of the print system including the reference marker adding unit and a medium pressing unit.
FIG. 12 is a diagram schematically illustrating a third specific example of the print system including the reference marker adding unit and the holding unit.
FIG. 13 is a plan view schematically illustrating the third specific example of the print system including the reference marker adding unit and the roller holding unit, the reference marker adding unit including a reference marker present in the reading range including dots.
FIG. 14 is a diagram schematically illustrating a fourth specific example of the print system including the reference marker adding unit and the medium pressing unit.
FIG. 15 is a diagram schematically illustrating a fifth specific example of the print system including the reference marker adding unit and the holding unit.
FIG. 16 is a diagram schematically illustrating an emission unit in a sixth specific example.
FIG. 17 is a diagram schematically illustrating a reference marker table in the sixth specific example.
FIG. 18 is a plan view schematically illustrating a seventh specific example of the print system including the reference marker adding unit including a reference marker present in a reading range including dots.
FIG. 19 is a flowchart schematically illustrating reference marker color control processing in an eighth specific example.
FIG. 20 is a diagram schematically illustrating a comparative example of a reading result including dots.

### DESCRIPTION OF EMBODIMENTS

An embodiment of the present disclosure will be described below. Of course, the following embodiment merely illustrates the present disclosure, and all of the features described in the embodiment are not necessarily essential to the solutions disclosed herein.

### (1) Overview of Aspects in Present Disclosure

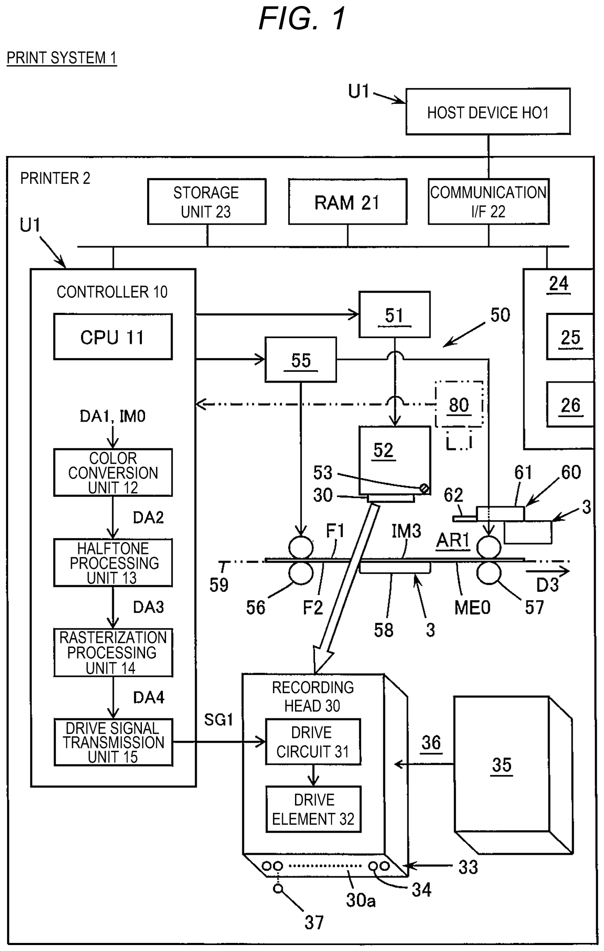

An overview of aspects included in the present disclosure will first be described with reference to examples illustrated in FIGS. 1 to 20. Note that the drawings of the present application are diagrams schematically illustrating examples, and in order to make each portion in these drawings have a recognizable size, a scale of each portion may be different from an actual scale, an enlargement factor may be different among directions illustrated in the drawings, and the drawings may not be consistent with one another. Of course, respective elements in these aspects are not limited to specific examples denoted by signs. In "Overview of aspects in present disclosure", a term in parentheses refers to supplementary description of a term immediately before the parentheses.

### Aspect 1

As illustrated in FIGS. 1, 6, 9, 12 and the like, a print system 1 according to an aspect includes a recording head 30, a drive unit 50, a read unit 80, a control unit U1, a holding unit 3, and a reference marker adding unit 60. The recording head 30 can eject liquid droplets 37 for forming a print image IM3 onto a medium ME0. The drive unit 50 changes a relative positional relationship between the recording head 30 and the medium ME0. The read unit 80 reads a state of the liquid droplet 37 landed on the medium ME0 in a reading range AR1. The control unit U1 controls ejection of the liquid droplets 37 from the recording head 30, and executes processing based on a reading result RS0 of the read unit 80. Vibration transmitted to the medium ME0 is transmitted to the holding unit 3. The reference marker adding unit 60 is provided at the holding unit 3, and displays information indicating whether a reference marker 62 falls within the reading range AR1, the reference marker 62 indicating a reference of a landing position of the liquid droplet 37 onto the medium ME0. The control unit U1 executes the processing with the reference marker 62 included in the reading result RS0 as a reference of the landing position.

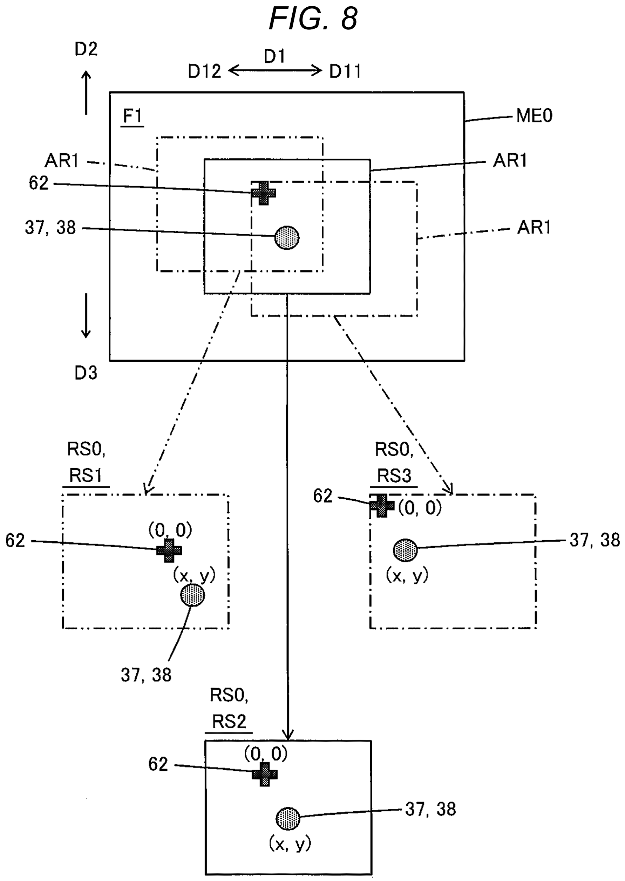

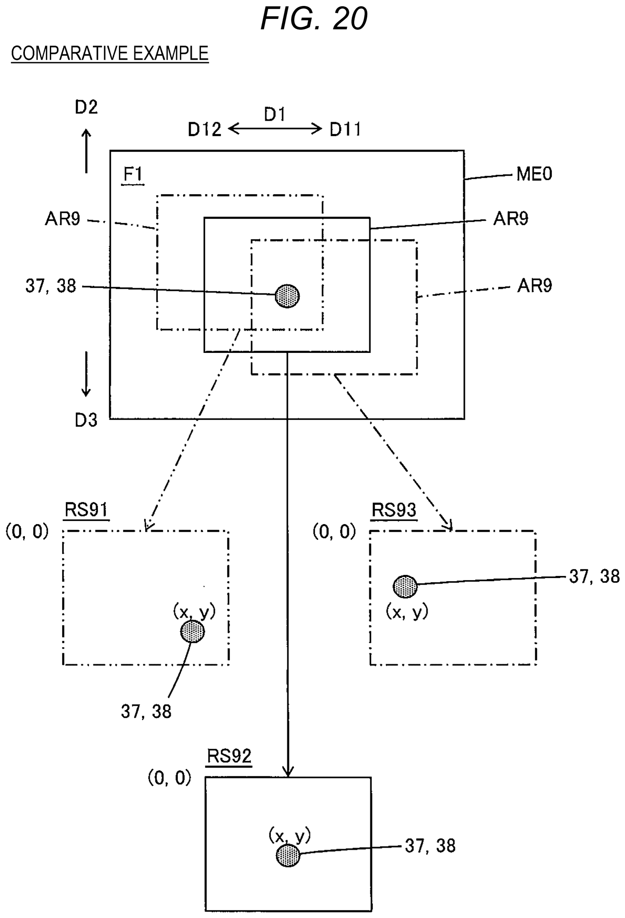

Vibration is transmitted to the medium ME0 from the drive unit 50 or the like. Since vibration of the read unit 80 and vibration of the medium ME0 are different from each other, relative vibration occurs between the medium ME0 and the read unit 80 as illustrated in FIG. 20. In the above aspect, the reference marker adding unit 60 is provided at the holding unit 3 that receives vibration transmitted to the medium ME0, and the reference marker 62 is read by the read unit 80 in a state where the reference marker 62 added by the reference marker adding unit 60 enters the reading range AR1. Even when the relative vibration occurs between the medium ME0 and the read unit 80, since the reference marker adding unit 60 is provided at the holding unit 3 that receives the vibration transmitted to the medium ME0, the vibration of the reference marker 62 with reference to the medium ME0 can be reduced, and as illustrated in FIG. 8, a position error of the reference marker 62 relative to the medium ME0 can be reduced. Accordingly, processing based on the reading result RS0 including the reference marker 62 having a small position error is executed with the reference marker 62 as a reference of a landing position. Therefore, according to the above aspect, it is possible to provide a print system capable of accurately executing processing based on a reading result even when relative vibration occurs between the medium and the read unit.

Various examples are listed in the aspect described above.

The medium includes various media such as paper, fabric, and film.

A change in the relative positional relationship described above refers to a movement of at least one of the recording head and the medium. Therefore, the drive unit may move the recording head without moving the medium, may move the medium without moving the recording head, or may move both the recording head and the medium.

Examples of the read unit include an imaging unit such as a camera, and a line sensor.

The processing based on the reading result includes bidirectional adjustment (Bi-d adjustment) for aligning a landing position in a forward path and a landing position in a backward path, paper feeding adjustment (adjustment of a medium conveyance amount), density adjustment, and the like.

The holding unit may be any portion that receives vibration from a vibration source, and may be a roller holding unit that rotatably holds a rotatable roller configured to come into contact with the medium, a medium holding unit that holds a back surface of a medium, a medium pressing unit that presses an edge portion of a medium toward the medium holding unit, a housing of a printer, or the like.

The vibration may be transmitted from a common vibration source to the medium and the holding unit, from the medium to the holding unit, or from the holding unit to the medium.

Execution of the processing with the reference marker as the reference of the landing position includes executing the processing based on a landing position by obtaining the landing position with a position of the reference marker as an origin based on a reading result, executing the processing based on a region of a predetermined range obtained by cutting out the region of the predetermined range centered on the reference marker from the reading result, and the like.

The additional remarks described above also apply to the following aspects.

### Aspect 2

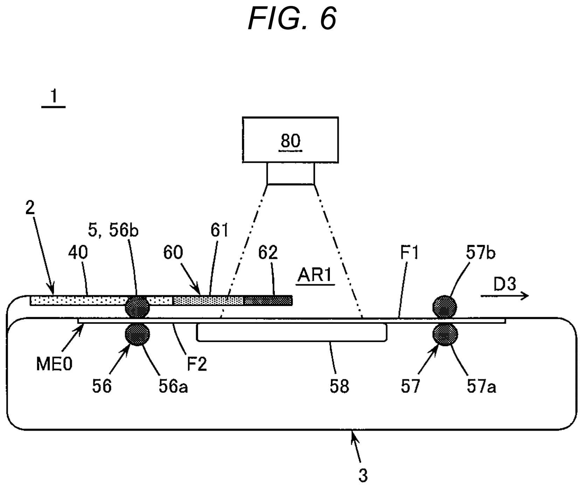

As illustrated in FIGS. 6, 7, and 11, the reference marker adding unit 60 may include the reference marker 62 in the reading range AR1 and a base portion 61 provided in the holding unit 3 and coupled to the reference marker 62.

In the above case, the vibration transmitted to the medium ME0 is read by the read unit 80 in a state where the reference marker 62 enters the reading range AR1, the reference marker 62 being coupled to the base portion 61 provided at the holding unit 3 that receives the vibration transmitted to the medium ME0. Accordingly, a position error of the reference marker 62 with respect to the medium ME0 is small, and the processing based on the reading result RS0 including the reference marker 62 is executed using the reference marker 62 as a reference of a landing position. Therefore, according to the above aspect, it is possible to provide a suitable example for accurately executing processing based on a reading result even when relative vibration occurs between the medium and the read unit. In addition, since electric power is not required for the reference marker, the reference marker can be semi-permanently read by the read unit.

### Aspect 3

As illustrated in FIGS. 1, 6, 7 and the like, the drive unit 50 may convey the medium ME0 in a predetermined direction (for example, a feeding direction D3). The print system 1 may further include a rotatable roller 5 configured to come into contact with the medium ME0 that can be moved in the predetermined direction. The holding unit 3 may include a roller holding unit 40 that rotatably holds the roller 5. The base portion 61 may be coupled from the roller holding unit 40 to the reference marker 62.

Since the roller holding unit 40 presses the medium ME0 via the roller 5, the vibration of the medium ME0 is transmitted to the roller holding unit 40 via the roller 5. The vibration of the roller holding unit 40 may be transmitted to the medium ME0. Since the base portion 61 of the reference marker adding unit 60 is coupled from the roller holding unit 40 to the reference marker 62, the vibration of the medium ME0 is indirectly transmitted to the reference marker 62. Accordingly, it is possible to further reduce the position error of the reference marker 62 relative to the medium ME0. Therefore, according to the above aspect, it is possible to provide a further suitable example for accurately executing processing based on a reading result even when relative vibration occurs between the medium and the read unit.

Here, the roller may be a drive roller that moves the medium in a predetermined direction, or may be a driven roller that rotates according to a movement of the medium in the predetermined direction. The additional remark described above also applies to the following aspects.

### Aspect 4

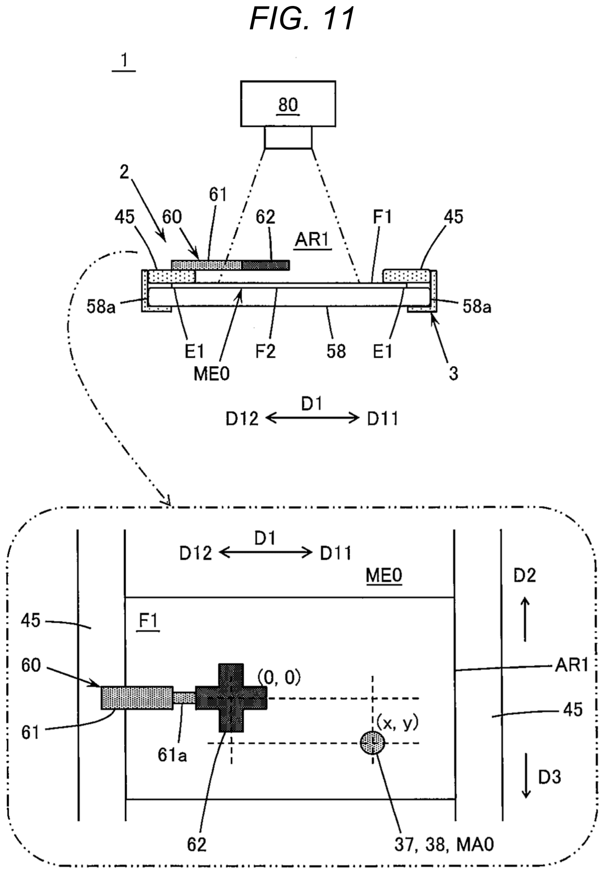

As illustrated in FIG. 11 and the like, the medium ME0 may have a first surface F1 on which the liquid droplets 37 land, and a second surface F2 opposite to the first surface F1. The holding unit 3 may include a medium holding unit (for example, a platen 58) that holds the second surface F2, and may include a medium pressing unit 45 that presses, from the first surface F1 toward the medium holding unit (58), an edge portion E1 of the medium ME0 in a direction (for example, a main scanning direction D1) intersecting the predetermined direction. The base portion 61 may be coupled from the medium pressing unit 45 to the reference marker 62.

In the above case, since the medium pressing unit 45 presses the edge portion E1 of the medium ME0 from the first surface F1 toward the medium holding unit (58), the vibration of the medium ME0 is transmitted to the medium pressing unit 45. The vibration of the medium pressing unit 45 may be transmitted to the medium ME0. Since the base portion 61 of the reference marker adding unit 60 is coupled from the medium pressing unit 45 to the reference marker 62, the vibration of the medium ME0 is indirectly transmitted to the reference marker 62. Accordingly, it is possible to further reduce the position error of the reference marker 62 relative to the medium ME0. Therefore, according to the above aspect, it is possible to provide a further suitable example for accurately executing processing based on a reading result even when relative vibration occurs between the medium and the read unit.

### Aspect 5

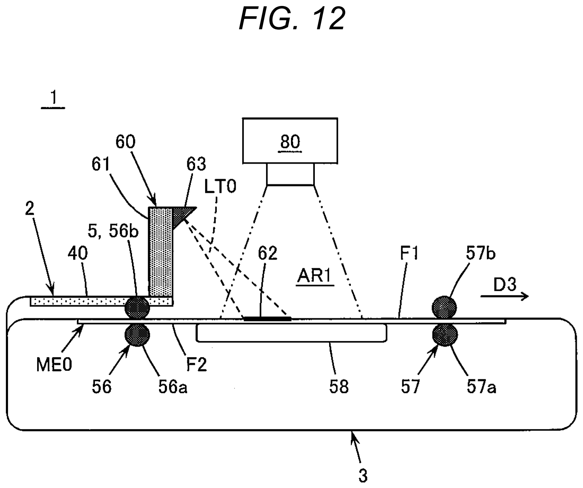

As illustrated in FIGS. 12 to 15, the reference marker adding unit 60 may emit light LT0 for displaying the reference marker 62 to a portion of the medium ME0 serving as the reading range AR1.

In the above case, the vibration transmitted to the medium ME0 is read by the read unit 80 in a state where the reference marker 62 enters the reading range AR1, the reference marker 62 being displayed on the portion of the medium ME0 serving as the reading range AR1 by the light LT0 emitted from the reference marker adding unit 60 provided at the holding unit 3 that receives the vibration transmitted to the medium ME0. Accordingly, a position error of the reference marker 62 with respect to the medium ME0 is small, and the processing based on the reading result RS0 including the reference marker 62 is executed using the reference marker 62 as a reference of a landing position. Therefore, according to the above aspect, it is possible to provide a suitable example for accurately executing processing based on a reading result even when relative vibration occurs between the medium and the read unit. In addition, distortion or the like of a member does not occur in the displayed reference marker. Further, when there is a failure in the reference marker adding unit, the failure of the reference marker adding unit is easily determined because light is not emitted or the emitted light becomes weak.

### Aspect 6

As illustrated in FIGS. 12 to 15, the print system 1 may further include the rotatable roller 5 that comes into contact with the medium ME0. The holding unit 3 may include the medium holding unit (58) that holds the second surface F2, and may include the roller holding unit 40 that rotatably holds the roller 5. The reference marker adding unit 60 may be provided at the roller holding unit 40 or the medium holding unit (58).

In the above case, since the roller holding unit 40 presses the medium ME0 via the roller 5, the vibration of the medium ME0 is transmitted to the roller holding unit 40 via the roller 5. The vibration of the roller holding unit 40 may be transmitted to the medium ME0. Since the medium holding unit (58) holds the second surface F2 of the medium ME0, the vibration to be transmitted is transmitted to the medium ME0. Since the reference marker adding unit 60 that emits the light LT0 for displaying the reference marker 62 is provided at the roller holding unit 40 or the medium holding unit (58), the vibration of the reference marker 62 follows the vibration of the medium ME0. Accordingly, it is possible to further reduce the position error of the reference marker 62 relative to the medium ME0. Therefore, according to the above aspect, it is possible to provide a further suitable example for accurately executing processing based on a reading result even when relative vibration occurs between the medium and the read unit.

### Aspect 7

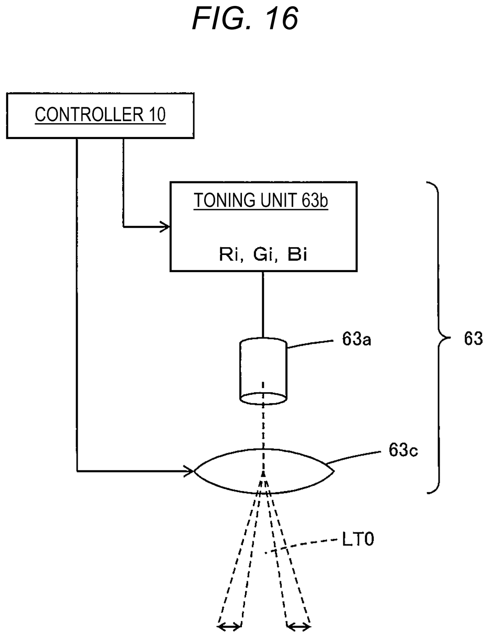

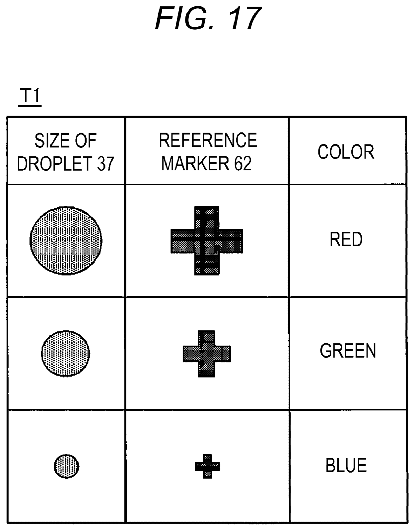

As illustrated in FIGS. 16 and 17, the reference marker adding unit 60 may be configured to change at least one of a size and a color of the reference marker 62 to be displayed. The control unit U1 may control the emission of the light LT0 from the reference marker adding unit 60 such that at least one of the size and the color of the reference marker 62 changes according to a size of the liquid droplet 37 ejected to the portion of the medium ME0 serving as the reading range AR1.

In the above case, processing can be executed based on a reading result according to the size of the liquid droplet ejected onto the portion of the medium serving as the reading range.

### Aspect 8

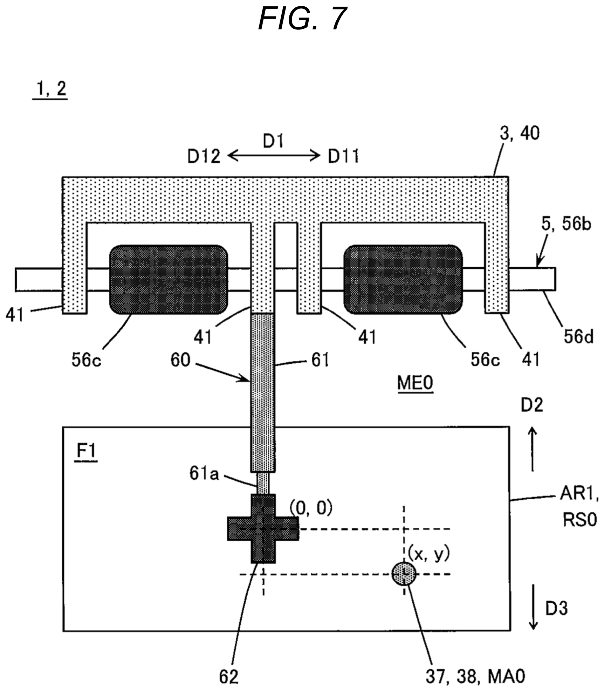

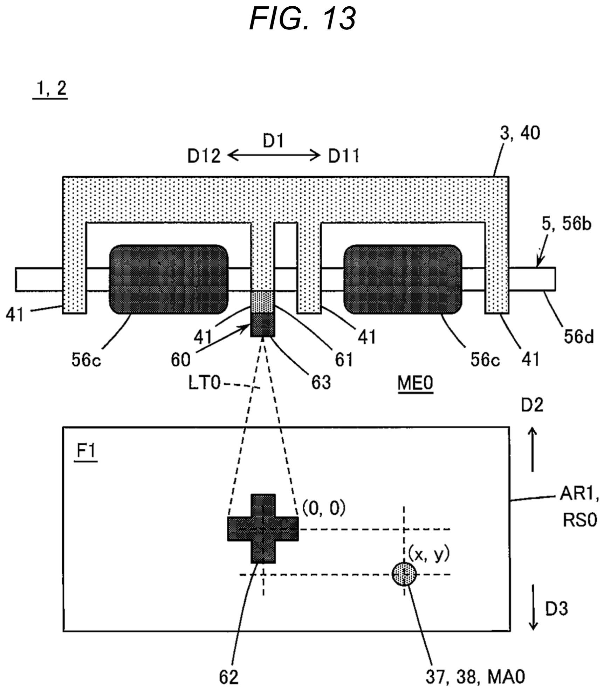

As illustrated in FIGS. 7, 13 and the like, the reference marker 62 may have a cross shape.

In the above case, since the reference marker 62 included in the reading result RS0 has a cross shape, it is easy to specify a position of the reference marker 62 included in the reading result RS0. Therefore, in the above aspect, processing can be executed more accurately based on the reading result.

When the reference marker adding unit includes the base portion and the reference marker of a cross shape, a portion between the base portion and the reference marker of a cross shape may be thinner than the reference marker.

### Aspect 9

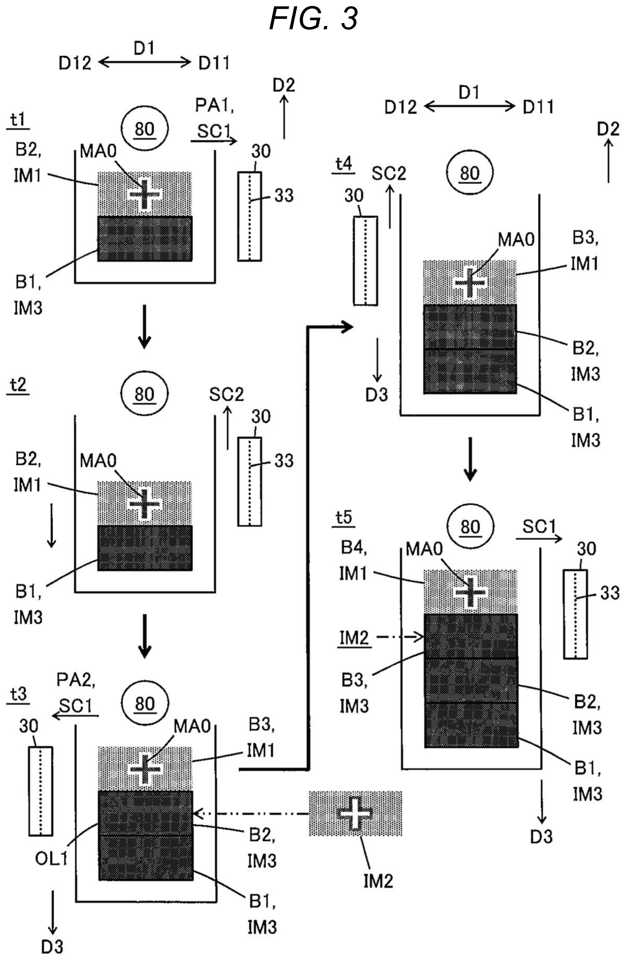

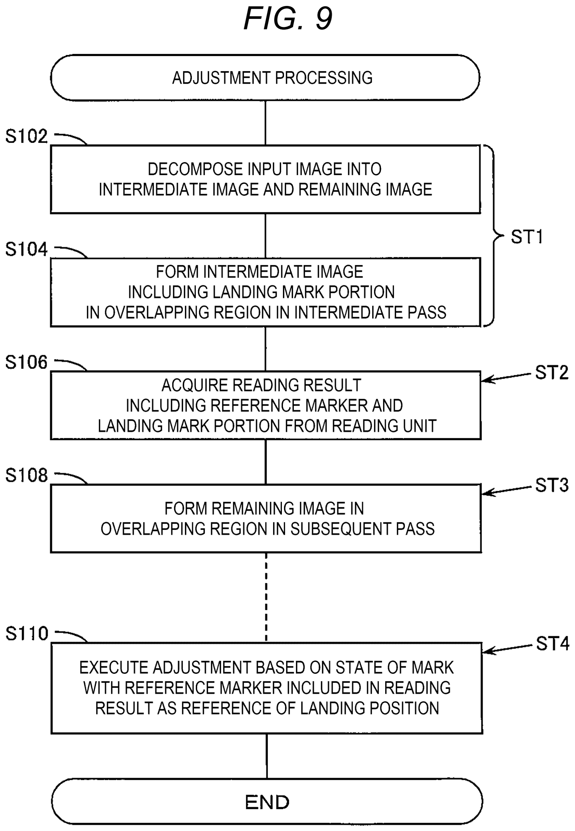

As illustrated in FIG. 3, the drive unit 50 may be configured to execute main scanning SC1 in which a relative positional relationship between the recording head 30 and the medium ME0 is changed along the main scanning direction D1, and sub scanning SC2 in which the relative positional relationship between the medium ME0 and the recording head 30 is changed along a sub scanning direction D2 intersecting the main scanning direction D1. The control unit U1 may control the main scanning SC1 by the drive unit 50, control the sub scanning SC2 by the drive unit 50, and control the ejection of the liquid droplets 37 from the recording head 30, and may complete recording of the print image IM3 by the main scanning SC1 of a plurality of passes. Further, as illustrated in FIGS. 3 and 9, the control unit U1 may execute the following control.
(a1) The control unit U1 executes control to form an intermediate image IM1 including a landing mark portion MA0, which can be read by the read unit 80, on the medium ME0 based on an input image IM0 in an intermediate pass among the plurality of passes.
(a2) The control unit U1 executes control to form a remaining image IM2 of the print image IM3 excluding the intermediate image IM1 on the medium ME0 in a pass after the intermediate pass.
(a3) When the landing mark portion MA0 is included in the reading result RS0, the control unit U1 determines a state of the landing mark portion MA0 with the reference marker 62 included in the reading result RS0 as a reference of a landing position.
(a4) The control unit U1 executes processing based on the state of the landing mark portion MA0.

In the above case, the intermediate image IM1 including the landing mark portion MA0 that can be read by the read unit 80 is formed on the medium ME0 based on the input image IM0 in an intermediate pass of the plurality of passes. When the reading result RS0 includes the landing mark portion MA0, the control unit U1 determines a state of the landing mark portion MA0 with the reference marker 62 included in the reading result RS0 as a reference of a landing position. The remaining image IM2 of the print image IM3 excluding the intermediate image IM1 is formed on the medium ME0 in a pass after the intermediate pass. Although the landing mark portion MA0 is embedded in the print image IM3, processing based on the reading result RS0 can be executed based on the state of the landing mark portion MA0.

As described above, it is not necessary to separately print a test pattern for adjusting features of the print image IM3. Therefore, in the above aspect, it is possible to reduce a liquid consumption amount, a medium consumption amount, and a printing time for printing the test pattern. In particular, as the landing mark portion is smaller, the influence of the relative vibration between the medium and the read unit is larger, and thus the effect of the above aspect is larger.

Here, the intermediate pass in Aspect 9 refers to any pass from a start time of recording of the print image to the last pass in which the print image is completed, and includes the first pass.

The state of the landing mark portion includes a position of the landing mark portion, a density of the landing mark portion, and the like.

A recording method of the print image is not particularly limited as long as there is a portion of the print image in which recording is completed in a plurality of passes, and may be a method of performing the recording in both a forward path and a backward path in the main scanning, or a method of executing the recording only in one of the forward path and the backward path in the main scanning. The recording including the portion of the print image completed by the plurality of passes may be multi-pass recording in which the entire print image is formed by two or more passes, or may be recording including a portion of the print image completed by a single pass such as band printing in which recording regions partially overlap one another. In the multi-pass recording of the print image, the number of passes may be partially changed. A relative movement amount of the recording head during the sub scanning in the sub scanning direction may be the same in each pass or may be changed in the plurality of passes.

The additional remarks described above also apply to the following aspects.

### Aspect 10

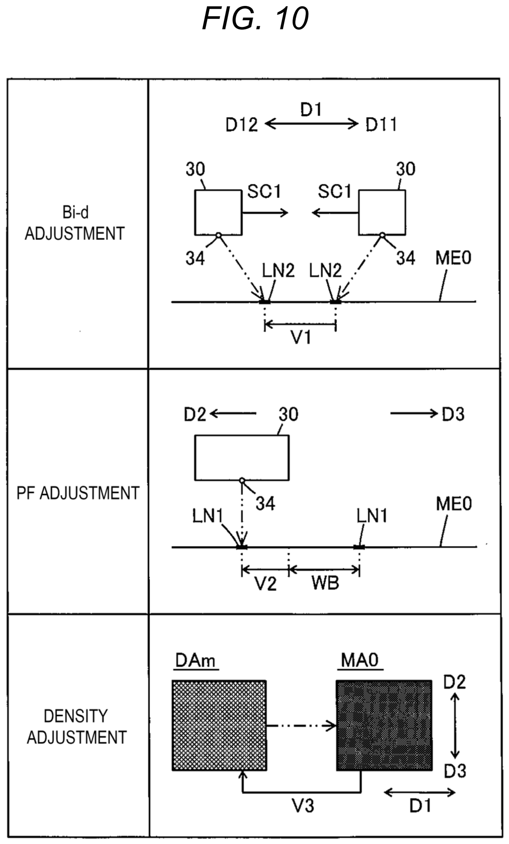

As illustrated in FIGS. 9 and 10, the control unit U1 may determine an adjustment value (for example, adjustment values V1 to V3) for adjusting features of the print image IM3 based on the state of the landing mark portion MA0, and may adjust the features of the print image IM3 according to the adjustment value.

In the above case, the features of the print image can be adjusted without printing the test pattern.

### Aspect 11

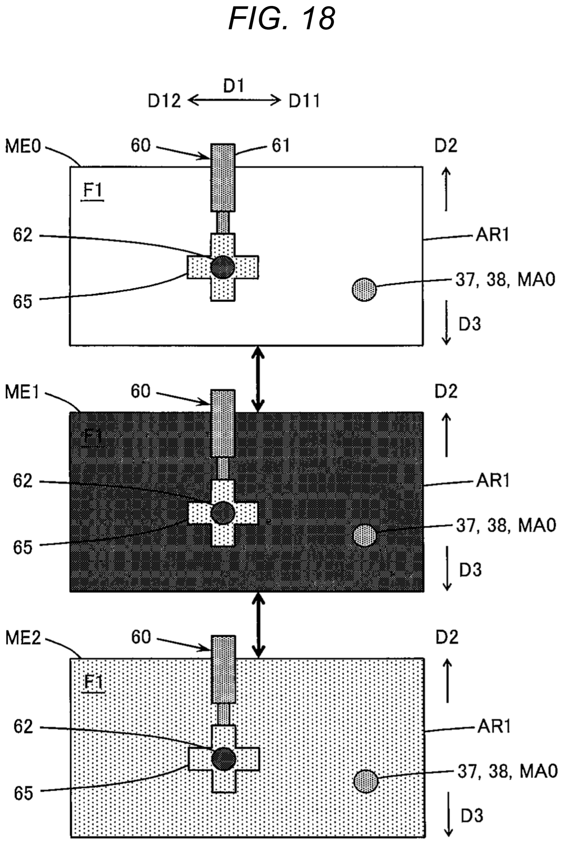

As illustrated in FIG. 18, the reference marker 62 may include a different color portion 65, which has a color different from a color of the reference marker 62, around the reference marker 62.

If the color of the reference marker 62 is close to a color of the medium ME0 when the different color portion 65 is not provided, it is not easy for the reference marker adding unit 60 to specify the reference marker 62 from the reading result RS0. Since the reference marker 62 has a color different from that of the surrounding different color portion 65, the reference marker can be easily specified from the reading result regardless of the color of the medium.

### Aspect 12

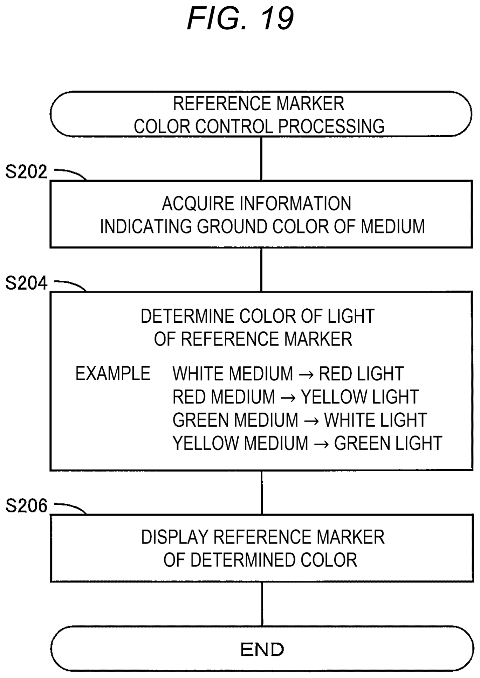

As illustrated in FIG. 19, the reference marker adding unit 60 may be configured to change a color of the light LT0. The control unit U1 may acquire information indicating the color of the medium ME0, and may control the color of the light LT0 from the reference marker adding unit 60 to a color different from the color indicated by the information.

When the color of the reference marker 62 is close to the color of the medium ME0, it is not easy to specify the reference marker 62 from the reading result RS0. By controlling the display color of the reference marker 62 to a color different from the color of the medium ME0, the reference marker can be easily specified from the reading result regardless of the color of the medium.

### Aspect 13

Incidentally, a control method of the print system 1 according to an aspect is a control method of the print system 1 that includes the recording head 30, the drive unit 50, and the read unit 80, that controls the ejection of the liquid droplets 37 from the recording head 30, and that executes processing based on the reading result RS0 of the read unit 80. The print system 1 further includes the holding unit 3 and the reference marker adding unit 60. As illustrated in FIG. 9, the present control method includes the following steps.
(b1) The control method includes a reading step ST2 of acquiring the reading result RS0 including the reference marker 62.
(b2) The control method includes a processing step ST4 of executing the processing with the reference marker 62 included in the reading result RS0 as a reference of the landing position.

According to the above aspect, it is possible to provide a control method of the print system capable of accurately executing processing based on a reading result even when relative vibration occurs between the medium and the read unit.

Here, in the present application, "first", "second", and the like are terms used to identify each component contained in a plurality of similar components, and do not indicate the order.

Further, the aspects described above can be applied to a print apparatus provided in the print system described above, a control method of the print apparatus, a control program of the print system described above, a control program of the print apparatus described above, a computer-readable non-transitory recording medium that records any one of the control programs described above, and the like. In addition, the print apparatus described above may be implemented by a plurality of distributed portions.

### (2) Example of Print System that Forms Landing Mark Portion in Intermediate Pass

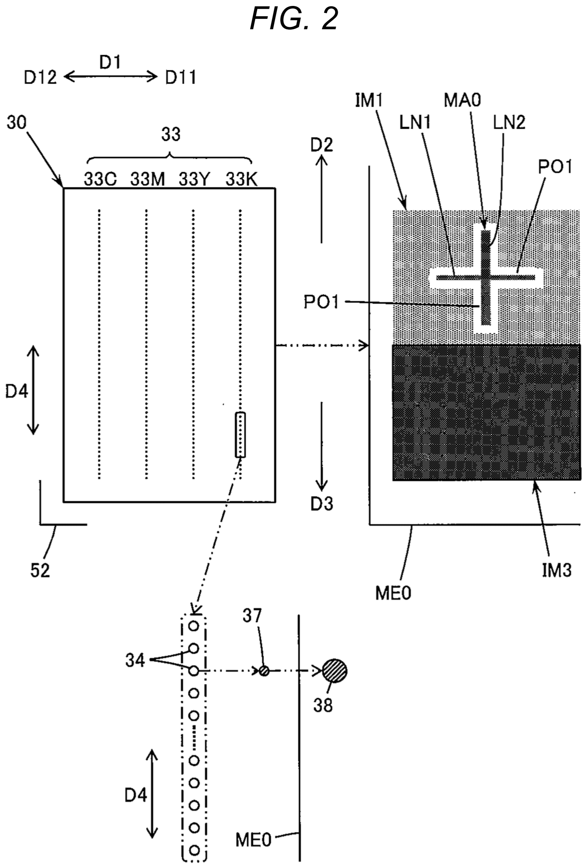

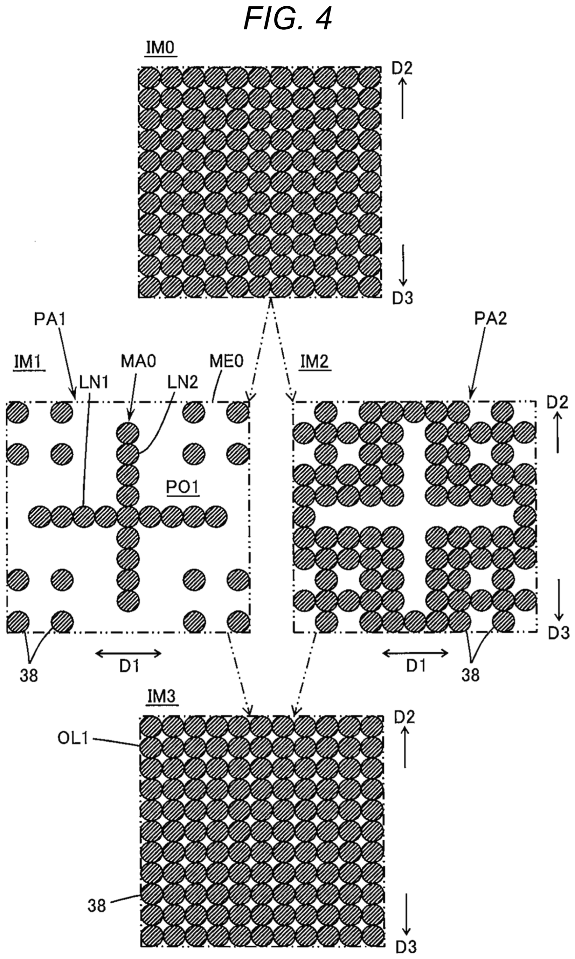

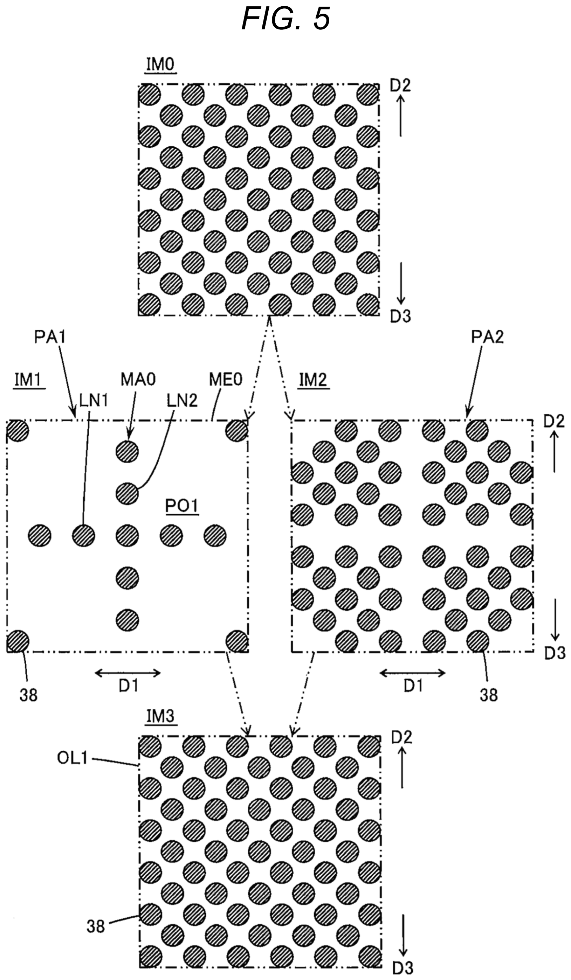

FIG. 1 schematically illustrates the print system 1 including a printer 2, a host device HO1, and a read unit 80. When the printer 2 has a function of the host device HO1, the print system 1 may not include the host device HO1. The read unit 80 may read the first surface F1 of the medium ME0 from the outside of the printer 2 or may be provided in the printer 2. The print system 1 may include additional elements not illustrated in FIG. 1. FIG. 2 schematically illustrates a nozzle row 33 of the recording head 30 and the landing mark portion MA0 on the medium ME0. FIG. 3 schematically illustrates a state where the main scanning SC1 and the sub scanning SC2 are repeated to form the print image IM3. The printer 2 in the specific example is a serial printer that repeats the main scanning SC1 and the sub scanning SC2 so that an overlapping region is generated between passes. FIGS. 4 and 5 schematically illustrate a dot arrangement until the print image IM3 is formed in the overlapping region OL1 between passes.

The printer 2 illustrated in FIG. 1 is an inkjet printer that ejects, onto the medium ME0, the liquid droplets 37 for forming the print image IM3 corresponding to the input image IM0. The holding unit 3 of the printer 2 includes a frame member disposed in a housing of the printer 2 and the platen 58 fixed to the frame member. The platen 58 is an example of a medium holding unit that holds the second surface F2 opposite to the first surface F1 on which the liquid droplets 37 land. The printer 2 includes a controller 10, a random access memory (RAM) 21, which is a semiconductor memory, a communication interface (I/F) 22, a storage unit 23, an operation panel 24, the recording head 30, the drive unit 50, the reference marker adding unit 60, and the like. The controller 10 and the host device HO1 are examples of the control unit U1. The controller 10, the RAM 21, the communication I/F 22, the storage unit 23, and the operation panel 24 are coupled to a bus and can input and output information to and from each other.

The reference marker adding unit 60 includes the base portion 61 provided at the holding unit 3 and the reference marker 62 present in the reading range AR1 of the read unit 80. Details of the reference marker adding unit 60 will be described later.

The controller 10 includes a central processing unit (CPU) 11, which is a processor, a color conversion unit 12, a halftone processing unit 13, a rasterization processing unit 14, a drive signal transmission unit 15, and the like. The controller 10 controls the main scanning SC1 and the sub scanning SC2 by the drive unit 50 and controls the ejection of the liquid droplets 37 by the recording head 30 based on original image data DA1 acquired from any one of the host device HO1, a memory card (not illustrated), and the like. It can be said that the controller 10 controls the drive unit 50 and the recording head 30 such that the print image IM3 corresponding to the original image data DA1 is formed on the medium ME0. For example, RGB data having, for example, integer values at 2⁸ tones or 2¹⁶ tones of red (R), green (G), and blue (B) for each pixel can be applied to the original image data DA1.

The controller 10 can be implemented by a system on a chip (SoC) or the like.

The CPU 11 is a device that mainly executes information processing and control in the printer 2.

The color conversion unit 12 refers to, for example, a color conversion lookup table (LUT) that defines a correspondence relationship between tone values of R, G, and B and tone values of cyan (C), magenta (M), yellow (Y), and black (K), and converts RGB data into ink amount data DA2 having integer values of 2⁸ tones or 2¹⁶ tones of C, M, Y, and K for each pixel. The ink amount data DA2 represents use amounts of liquids 36 of C, M, Y, and K in units of pixels. When resolution of the RGB data is different from print resolution, the color conversion unit 12 first converts the resolution of the RGB data into the print resolution or converts the resolution of the ink amount data DA2 into the print resolution.

The halftone processing unit 13 executes halftone processing on tone values of pixels for forming the ink amount data DA2 by any one of a dither method, an error diffusion method, and the like, thereby reducing the number of tones of the tone value, and generates dot data DA3. The dot data DA3 represents a formation state of dots 38 of the liquid droplets 37 in units of pixels. The dot data DA3 may be binary data representing the presence or absence of dot formation, or may be multi-level data in three or more tones that can cope with dots different in sizes such as small, medium, and large dots.

The rasterization processing unit 14 executes rasterization processing of rearranging the dot data DA3 in order in which the dots 38 are formed by the drive unit 50, thereby generating raster data DA4.

The drive signal transmission unit 15 generates a drive signal SG1 based on the raster data DA4 and outputs the drive signal SG1 to a drive circuit 31 of the recording head 30. The drive signal SG1 corresponds to a voltage signal applied to a drive element 32 of the recording head 30. For example, when the dot data DA3 represents "dot formation", the drive signal transmission unit 15 outputs the drive signal SG1 for ejecting liquid droplets for dot formation. Further, in a case where the dot data DA3 is data having three or more values, the drive signal transmission unit 15 outputs the drive signal SG1 for ejecting liquid droplets for large dots when the dot data DA3 represents "large dot formation", and outputs the drive signal SG1 for ejecting liquid droplets for small dots when the dot data DA3 represents "small dot formation". The print image IM3 is formed on the medium ME0 according to the drive signal SG1.

When the controller 10 executes adjustment processing (see FIG. 9) to be described later, the original image data DA1 may be applied to the input image IM0. Instead, the ink amount data DA2, the dot data DA3, or the raster data DA4 may be applied to the input image IM0.

The above-described elements (11 to 15) may be implemented by an application specific integrated circuit (ASIC), and may directly read processing target data from the RAM 21 or directly write processed data to the RAM 21.

The drive unit 50 controlled by the controller 10 includes a carriage drive unit 51 including a servo motor and a roller drive unit 55 including a servo motor, and is fixed to a frame member. According to the control of the controller 10, the drive unit 50 drives the carriage drive unit 51 to cause a carriage 52 to reciprocate along the main scanning direction D1, and drives the roller drive unit 55 to send the medium ME0 in a feeding direction D3 along a conveyance path 59. Therefore, the drive unit 50 is an element that can be a vibration source, and vibration from the drive unit 50 is transmitted to the platen 58 and the like via a frame member. As illustrated in FIG. 2, the main scanning direction D1 is a direction intersecting an arrangement direction D4 of nozzles 34 in the nozzle row 33, and is, for example, a direction orthogonal to the arrangement direction D4. In FIG. 2, a right direction is a forward direction D11 of the main scanning SC1, and a left direction is a backward direction D12 of the main scanning SC1. The feeding direction D3 is a direction intersecting the main scanning direction D1, and is, for example, a direction orthogonal to the main scanning direction D1. In FIG. 1, the feeding direction D3 is the right direction. The sub scanning direction D2 illustrated in FIG. 2 is a direction opposite to the feeding direction D3. It can be said that the carriage drive unit 51 performs the main scanning SC1 in which a relative positional relationship between the recording head 30 and the medium ME0 is changed along the main scanning direction D1. The roller drive unit 55 includes a conveyance roller pair 56 and an ejection roller pair 57. According to the control of the controller 10, the roller drive unit 55 performs the sub scanning SC2 in which the medium ME0 is fed in the feeding direction D3 by rotating a drive conveyance roller of the conveyance roller pair 56 and a drive ejection roller of the ejection roller pair 57. It can be said that the roller drive unit 55 performs the sub scanning SC2 in which a relative positional relationship between the medium ME0 and the recording head 30 is changed along the sub scanning direction D2 intersecting the main scanning direction D1. Although the carriage 52 illustrated in FIG. 2 does not move in the sub scanning direction D2, the drive unit 50 may achieve the sub scanning SC2 by moving the carriage 52 in the sub scanning direction D2. At this time, the medium ME0 may not move in the sub scanning direction D2, and the drive unit 50 may achieve the sub scanning SC2 by moving both the carriage 52 and the medium ME0 in the sub scanning direction D2. As illustrated in FIG. 3, the control unit U1 completes the recording of the print image IM3 by the main scanning SC1 of a plurality of passes.

The medium ME0 is a print target object that holds a print image. A material of the medium ME0 is not particularly limited, and various materials such as paper, resin, and metal are conceivable. A shape of the medium ME0 is not particularly limited, and various shapes such as a rectangular shape and a roll shape are conceivable, and the medium ME0 may have a three-dimensional shape.

The platen 58 is below the conveyance path 59 and holds the medium ME0 when the platen 58 comes into contact with the second surface F2 of the medium ME0 in the conveyance path 59.

The recording head 30 is mounted on the carriage 52. A liquid cartridge 35 that supplies the liquid 36 ejected as the liquid droplets 37 to the recording head 30 may be mounted on the carriage 52. Of course, the liquid 36 may be supplied to the recording head 30 via a tube from the liquid cartridge 35 installed outside the carriage 52. The liquid 36 may be supplied to the recording head 30 via a tube from an ink tank (not illustrated). The carriage 52 is fixed to an endless belt (not illustrated) and is movable in the main scanning direction D1 along a long guide 53 whose longitudinal direction is oriented in the main scanning direction D1.

The recording head 30 controlled by the controller 10 includes the drive circuit 31, the drive element 32, and the like, and causes the liquid 36 to adhere to the medium ME0 by ejecting the liquid droplets 37 toward the medium ME0 held by the platen 58. Therefore, it can be said that the control unit U1 controls the ejection of the liquid droplets 37 from the recording head 30.

The drive circuit 31 applies a voltage signal to the drive element 32 according to the drive signal SG1 input from the drive signal transmission unit 15. The drive element 32 may be a piezoelectric element that applies pressure to the liquid 36 in a pressure chamber communicating with the nozzle 34, or may be a drive element or the like that generates air bubbles in the pressure chamber by heat and ejects the liquid droplets 37 from the nozzle 34. The liquid 36 is supplied from the liquid cartridge 35 to the pressure chamber of the recording head 30. The liquid 36 in the pressure chamber is ejected as the liquid droplets 37 from the nozzle 34 toward the medium ME0 by the drive element 32. Accordingly, the dots 38 of the liquid droplets 37 are formed on the medium ME0, and the print image IM3 expressed by a pattern of the dots 38 is formed on the medium ME0. The dots 38 based on the raster data DA4 are formed while the recording head 30 moves in the main scanning direction D1, and the medium ME0 is repeatedly fed by one sub scanning in the feeding direction D3, so that the print image IM3 is formed on the medium ME0. The printer 2 may perform bidirectional printing in which the print image IM3 is formed by both the main scanning in the forward direction D11 and the main scanning in the backward direction D12, or may perform unidirectional printing in which the print image IM3 is formed by only one of the main scanning in the forward direction D11 and the main scanning in the backward direction D12.

The RAM 21 stores the original image data DA1 and the like received from the host device HO1, a memory (not illustrated), and the like. The communication I/F 22 is coupled to the host device HO1 in a wired or wirelessly manner, and inputs information to and outputs information from the host device HO1. The host device HO1 includes a computer such as a personal computer or a tablet terminal, a mobile phone such as a smartphone, a digital camera, a digital video camera, and the like. The storage unit 23 may be a nonvolatile semiconductor memory such as a flash memory, or may be a magnetic storage device such as a hard disk. The operation panel 24 includes an output unit 25 such as a liquid crystal panel that displays information, an input unit 26 such as a touch panel that receives an operation on a display screen, and the like.

The read unit 80 may be provided outside the printer 2 or may be provided inside the printer 2. Since the read unit 80 has the reading range AR1, the read unit 80 reads a state of the liquid droplets 37 landed on the medium ME0 in the reading range AR1. The read unit 80 in the specific example reads a state of the landing mark portion MA0 included in an intermediate image IM1 together with the reference marker 62. The read unit 80 illustrated in FIGS. 1 and 3 is provided in the printer 2 so as not to move in the main scanning direction D1 separately from the carriage 52, and detects a density of the reading range AR1 on the medium ME0 in units of detection elements such as imaging elements.

The read unit 80 may be a solid-state imaging element such as an area sensor (or a line sensor) implemented by a charge coupled device (CCD) such as a so-called digital camera, a complementary metal-oxide semiconductor (CMOS) image sensor, a contact image sensor (CIS) type or a CCD type image sensor, or the like. An external digital camera or the like serving as the read unit 80 may be coupled to the printer 2. The read unit 80 in the specific example can detect a density of a pattern of the dots 38 formed on the medium ME0 in units of detection elements, and outputs a digital value representing the density in units of detection elements to the controller 10. The read unit 80 can read a state such as a position or a density of the landing mark portion MA0 in units of dots 38. Therefore, even when the dots 38 included in the landing mark portion MA0 are discretely arranged, the read unit 80 can read the state of the landing mark portion MA0. When the read unit 80 is a camera, the read unit 80 can capture the intermediate image IM1 including the landing mark portion MA0.

The recording head 30 illustrated in FIG. 2 includes, at a nozzle surface 30a, nozzle rows 33 in which a plurality of the nozzles 34 that can eject the liquid droplets 37 onto the medium ME0 are arranged at an interval that is a predetermined nozzle pitch, in the arrangement direction D4. Here, the nozzle refers to a small hole through which liquid droplets are ejected, and the nozzle row refers to an array of a plurality of nozzles. The nozzle surface 30a is an ejection surface of the liquid droplets 37. The nozzle row 33 includes, for example, a C nozzle row 33C that can eject the liquid droplets 37 of C onto the medium ME0, an M nozzle row 33M that can eject the liquid droplets 37 of M onto the medium ME0, a Y nozzle row 33Y that can eject the liquid droplets 37 of Y onto the medium ME0, and a K nozzle row 33K that can eject the liquid droplets 37 of Y onto the medium ME0. It can be said that the recording head 30 has a plurality of the nozzle rows 33, and the plurality of nozzle rows 33 are arranged in the main scanning direction D1. In each of the nozzle rows (33C, 33M, 33Y, 33K) illustrated in FIG. 2, the plurality of nozzles 34 are arranged in one row at intervals of a predetermined nozzle pitch in the arrangement direction D4. The plurality of nozzles 34 of each nozzle row (33C, 33M, 33Y, 33K) may be arranged in a staggered manner, that is, in two rows at intervals of a predetermined nozzle pitch in the arrangement direction D4. Here, the arrangement direction of the plurality of nozzles 34 arranged in a staggered manner is an arrangement direction of the nozzles focusing on each of the two rows.

As illustrated in FIG. 3, the print system 1 in the specific example forms the intermediate image IM1 on the medium ME0 based on the input image IM0 in an intermediate pass among a plurality of passes for the overlapping region OL1, and forms a remaining image IM2 on the medium ME0 in a subsequent pass. The formed print image IM3 is not a test pattern for adjustment such as Bi-d adjustment, paper feeding adjustment, and density adjustment, but is an image to be printed to obtain a printed matter that a user wants to use for various purposes. The print image IM3 can also be referred to as a non-adjustment target image. For example, the print image IM3 includes a natural image or a photographic image to be decorated or sold in a room by a user, a document image indicated to another person such as a line drawing for presentation, and the like. The intermediate image IM1 is formed based on the input image IM0 exemplified above. A printed matter of the print image IM3 that a user wants to use for various purposes described above is obtained by including the landing mark portion MA0 that can be read by the read unit 80 in the intermediate image IM1 and filling a peripheral region of the landing mark portion MA0 with the remaining image IM2 after the intermediate image IM1 is formed.

After the intermediate image IM1 is formed and before the remaining image IM2 is formed, the printer 2 causes the read unit 80 to read the state of the landing mark portion MA0 together with the reference marker 62. When position adjustment such as Bi-d adjustment or paper feeding adjustment is executed, the printer 2 causes the read unit 80 to read a position of the landing mark portion MA0 as the state of the landing mark portion MA0 with the reference marker 62 as a reference of a landing position. When the density adjustment of the print image IM3 is executed, the printer 2 causes the read unit 80 to read a density of the landing mark portion MA0 as the state of the landing mark portion MA0 with the reference marker 62 as a reference of a landing position. The read state of the landing mark portion MA0 is used for adjustment processing such as the position adjustment and the density adjustment described above.

As described above, it is not necessary to separately print a test pattern for adjustment of the printer 2. Therefore, a liquid consumption amount, a medium consumption amount, and a printing time for printing the test pattern are reduced.

The landing mark portion MA0 illustrated in FIG. 2 is an intersect pattern in which a main scanning line LN1 along the main scanning direction D1 and a sub scanning line LN2 along the sub scanning direction D2 intersect each other in patterns of the liquid droplets 37 landed on the medium ME0. The intersect pattern may be a cross pattern in which the main scanning line LN1 and the sub scanning line LN2 are orthogonal to each other as illustrated in FIG. 2, an L-shaped pattern in which an end of the main scanning line LN1 and an end of the sub scanning line LN2 are coupled to each other, a T-shaped pattern in which an end of the sub scanning line LN2 is coupled to an intermediate portion of the main scanning line LN1, a pattern in which an end of the main scanning line LN1 is coupled to an intermediate portion of the sub scanning line LN2, or the like. The main scanning line LN1 and the sub scanning line LN2 may intersect each other without being orthogonal to each other. Since the landing mark portion MA0 has the intersect pattern, both the Bi-d adjustment and the paper feeding adjustment can be executed.

In the intermediate image IM1 illustrated in FIG. 2, the dot 38 is not present at a landing position PO1 adjacent to the intersect pattern (LN1, LN2). The adjacent landing position PO1 may correspond to at least one dot.

Next, an example of bidirectional multi-pass printing will be described with reference to FIG. 3. In FIG. 3, the forward direction D11 of the main scanning SC1 is a right direction, and the backward direction D12 of the main scanning SC1 is a left direction. The feeding direction D3 which is a direction in which the medium ME0 moves during the sub scanning is a downward direction, and the sub scanning direction D2 which is a relative movement direction of the recording head 30 with reference to the medium ME0 is an upward direction. Band regions B1 to B4 which are units at which recording of the print image IM3 is completed correspond to half a length of the nozzle row 33 in the sub scanning direction D2. In the band regions B2 to B4, the recording of the print image IM3 is completed by the main scanning SC1 of two passes.

At a timing t1, the control unit U1 controls the main scanning SC1 so as to move the recording head 30 in the forward direction D11 while ejecting the liquid droplets 37 from the recording head 30 according to the band regions B1 and B2. Here, the intermediate image IM1 is formed by the first pass in the band region B2. The first pass in the band region B2 is referred to as a first pass PA1. Although not illustrated, in the band region B1, the print image IM3 is formed by forming the remaining image IM2 on the intermediate image IM1 formed in the previous pass. In the band region B1, after the intermediate image IM1 is formed and before the remaining image IM2 is formed, the control unit U1 acquires the state of the landing mark portion MA0 with the reference marker 62 as a reference of a landing position from the reading result of the read unit 80.

At a subsequent timing t2, the control unit U1 controls the sub scanning SC2 so as to move the medium ME0 along the sub scanning direction D2 until the recording head 30 is aligned with the band regions B2 and B3. In the band region B2, after the intermediate image IM1 is formed and before the remaining image IM2 is formed, the control unit U1 acquires the state of the landing mark portion MA0 with the reference marker 62 as a reference of a landing position from the reading result of the read unit 80.

At a subsequent timing t3, the control unit U1 controls the main scanning SC1 so as to move the recording head 30 in the backward direction D12 while ejecting the liquid droplets 37 from the recording head 30 according to the band regions B2 and B3. Here, the intermediate image IM1 is formed by the first pass in the band region B3, and the print image IM3 is formed by the second pass in the band region B2. The second pass in the band region B2 is referred to as a second pass PA2.

At a subsequent timing t4, the control unit U1 controls the sub scanning SC2 so as to move the medium ME0 along the sub scanning direction D2 until the recording head 30 is aligned with the band regions B3 and B4. In the band region B3, after the intermediate image IM1 is formed and before the remaining image IM2 is formed, the control unit U1 acquires the state of the landing mark portion MA0 with the reference marker 62 as a reference of a landing position from the reading result of the read unit 80.

At a subsequent timing t5, the control unit U1 controls the main scanning SC1 so as to move the recording head 30 in the forward direction D11 while ejecting the liquid droplets 37 from the recording head 30 according to the band regions B3 and B4. Here, the intermediate image IM1 is formed by the first pass in the band region B4, and the print image IM3 is formed by the second pass in the band region B3.

As described above, the control unit U1 controls the bidirectional multi-pass printing of forming the print image IM3 on the medium ME0 while repeating the main scanning SC1 and the sub scanning SC2.

As described above, at the timings t1 to t3, the band region B2 becomes an overlapping region OL1 (refer to FIGS. 4 and 5) in which image recording regions overlap between the first path PA1 and the second path PA2 after the first path PA1. At the timings t3 to t5, the band region B3 becomes the overlapping region OL1 in which image recording regions overlap between passes. In the example illustrated in FIG. 3, the control unit U1 executes control of forming the landing mark portion MA0 in the overlapping region OL1 in one pass. Since the landing mark portion MA0 is formed by one pass, an error occurring in the landing mark portion MA0 is reduced as compared with a case where the landing mark portion MA0 is formed by two or more passes.

In the above description, the first pass in the band region B2 is the first pass PA1, and the second pass in the band region B2 is the second pass PA2, but the first pass PA1 and the second pass PA2 are not limited to the band region B2. Each of the first pass PA1 and the second pass PA2 indicates the predetermined main scanning SC1 in which the recording head 30 is moved while ejecting the liquid droplet 37 and the main scanning SC1 after the predetermined main scanning SC1 in any one region, and may be executed in the band region B1 or may be executed in the band region B3 and subsequent regions.

First, an example in which the input image IM0 in which the dots 38 are formed at a recording rate of 100% is decomposed for each pass to form the print image IM3 will be described with reference to FIG. 4. In the schematic example illustrated in FIG. 4, the input image IM0 corresponds to the overlapping region OL1, and the printer 2 forms the print image IM3 in the overlapping region OL1 by two passes including the first pass PA1 and the second pass PA2.

First, the control unit U1 decomposes the input image IM0 into the intermediate image IM1 and the remaining image IM2. Here, the control unit U1 generates the intermediate image IM1 so as to include the landing mark portion MA0 based on the input image IM0. The dots 38 of the landing mark portion MA0 are derived from the input image IM0. FIG. 4 illustrates the main scanning line LN1 in which a plurality of the dots 38 are continuous in the main scanning direction D1, and the sub scanning line LN2 in which a plurality of the dots 38 are continuous in the sub scanning direction D2. The control unit U1 does not arrange the dot 38 at the landing position PO1 adjacent to the landing mark portion MA0 on the intermediate image IM1. Along with the generation of the intermediate image IM1, the control unit U1 generates the remaining image IM2 by removing the arrangement of the dots 38 of the intermediate image IM1 from the arrangement of the dots 38 of the input image IM0.

After the input image IM0 is decomposed, the control unit U1 executes control of forming the intermediate image IM1 on the medium ME0 in the first path PA1, and executes control of forming the remaining image IM2 on the medium ME0 in the second path PA2. Accordingly, a peripheral region including the landing position PO1 adjacent to the landing mark portion MA0 is filled with the remaining image IM2, and the print image IM3 is completed on the medium ME0. It can be said that trace of the landing mark portion MA0 does not remain in the print image IM3. The control unit U1 can execute processing based on the state of the landing mark portion MA0 by acquiring the state of the landing mark portion MA0 from the read unit 80 with the reference marker 62 as a reference of the landing position before forming the remaining image IM2.

The recording rate of the dots 38 of the print image IM3 may be smaller than 100%. FIG. 5 illustrates, for example, a state where the input image IM0 in which the dots 38 are formed at a recording rate of 50% is decomposed for each pass to form the print image IM3. In this case, the control unit U1 also decomposes the input image IM0 into the intermediate image IM1 and the remaining image IM2. As a result, an arrangement of the dots 38 of the landing mark portion MA0 is discrete. FIG. 5 illustrates a main scanning line LN1 in which a plurality of the dots 38 are discretely arranged in the main scanning direction D1, and a sub scanning line LN2 in which a plurality of the dots 38 are discretely arranged in the sub scanning direction D2. Here, the control unit U1 does not arrange the dot 38 at the landing position PO1 adjacent to the landing mark portion MA0 on the intermediate image IM1. Of course, along with the generation of the intermediate image IM1, the control unit U1 generates the remaining image IM2 by removing the arrangement of the dots 38 of the intermediate image IM1 from the arrangement of the dots 38 of the input image IM0.

After the input image IM0 is decomposed, the control unit U1 executes control of forming the intermediate image IM1 on the medium ME0 in the first path PA1, and executes control of forming the remaining image IM2 on the medium ME0 in the second path PA2. Accordingly, a peripheral region including the landing position PO1 adjacent to the landing mark portion MA0 is filled with the remaining image IM2, and the print image IM3 is completed on the medium ME0.

### (3) Comparative Example of Reading Result Including Dots

The printer 2 includes a vibration source such as the drive unit 50, and vibration from the vibration source is transmitted to the medium ME0. For example, when the carriage drive unit 51 moves the carriage 52 or the roller drive unit 55 feeds the medium ME0, vibration is generated in the printer 2 and the vibration is transmitted to the medium ME0. When the read unit 80 is outside the printer 2, since the medium ME0 vibrates with reference to the read unit 80, a reading range AR9 of the read unit 80 with respect to the first surface F1 of the medium ME0 varies as illustrated in FIG. 20. When the read unit 80 is inside the printer 2, the reading range AR9 with respect to the first surface F1 of the medium ME0 may vary due to a difference between a path of vibration transmitted from the vibration source to the medium ME0 and a path of vibration transmitted from the vibration source to the read unit 80. In any case, since the vibration of the medium ME0 and the vibration of the read unit 80 are different from each other, relative vibration occurs between the medium ME0 and the read unit 80.

FIG. 20 schematically illustrates reading results RS91 to RS93 including the dots 38 in the comparative example. As described above, the dots 38 are formed by the liquid droplets 37 ejected from the nozzles 34 landing on the first surface F1 of the medium ME0.

As described above, when the relative vibration occurs between the medium ME0 and the read unit 80, the reading range AR9 with respect to the medium ME0 varies. As indicated by a rectangle of a solid line in FIG. 20, when a certain dot 38 is near the center of the reading range AR9, the reading result RS92 in which the dot 38 is near the center is obtained by the read unit 80. Here, an upper left corner of each of the reading results RS91 to RS93 is set as an origin (0,0), and a position of the dot 38, that is, a landing position of the liquid droplet 37 is set as coordinates (x, y). As illustrated by a rectangle of a two-dot chain line in FIG. 20, when the reading range AR9 is deviated to the upper left with reference to a certain dot 38, the dot 38 included in the reading result RS91 is deviated to the lower right. Therefore, the coordinates (x, y) of the dot 38 move away from the origin (0,0). As illustrated by a rectangle of a one-dot chain line in FIG. 20, when the reading range AR9 is deviated to the lower right with reference to a certain dot 38, the dot 38 included in the reading result RS93 is deviated to the upper left. Therefore, the coordinates (x, y) of the dot 38 approach the origin (0,0). In any case, a large error occurs in landing positions of the liquid droplets 37 obtained from the reading results RS91 to RS93 due to the relative vibration between the medium ME0 and the read unit 80.

When the printer is adjusted by printing a test pattern and reading the test pattern, the test pattern can be read by, for example, placing the test pattern on a flatbed scanner. However, when the landing mark portion MA0 is formed on the medium ME0 in real time as illustrated in FIG. 3, it is necessary to read a position of a feature point with high accuracy during a printing operation. Since the feature point is embedded in the intermediate image IM1 and filled with the remaining image IM2, the feature point cannot be enlarged. Since the feature point to be read is small, an influence of the movement of the carriage 52 or the conveyance of the medium ME0 during printing tends to be larger than that in a case where a test pattern is used.

In the specific example, the read unit 80 reads the reading range AR1 in a state where the reference marker 62 of the reference marker adding unit 60 that receives vibration matching the vibration of the medium ME0 is provided in the reading range AR1. The control unit U1 adjusts the printer 2 with the reference marker 62 as a reference of a landing position. Accordingly, even when relative vibration occurs between the medium ME0 and the read unit 80, it is possible to accurately perform adjustment based on a reading result.

### (4) First Specific Example of Print System Including Reference Marker Adding Unit

FIG. 6 schematically illustrates a first specific example of the print system 1 including the reference marker adding unit 60 and the holding unit 3. FIG. 7 is a plan view schematically illustrating the first specific example of the print system 1 including the reference marker adding unit 60 and the roller holding unit 40, the reference marker adding unit 60 including the reference marker 62 present in the reading range AR1 including the dots 38.

The roller drive unit 55 described above includes the conveyance roller pair 56 and the ejection roller pair 57, and conveys the medium ME0 in the feeding direction D3 serving as a predetermined direction. The conveyance roller pair 56 includes a drive conveyance roller 56a and a driven conveyance roller 56b. The ejection roller pair 57 includes a drive ejection roller 57a and a driven ejection roller 57b. The holding unit 3 that receives the vibration transmitted to the medium ME0 includes the platen 58 and the roller holding unit 40 that rotatably holds the driven conveyance roller 56b. In this case, the driven conveyance roller 56b is an example of the rotatable roller 5 that comes into contact with the medium ME0, which is movable in a predetermined direction. The vibration of the medium ME0 is transmitted to the roller holding unit 40 via the driven conveyance roller 56b. Since the roller holding unit 40 is fixed to the frame member, the vibration of the roller holding unit 40 may be transmitted to the medium ME0 via the driven conveyance roller 56b.

The driven conveyance roller 56b illustrated in FIG. 7 includes a plurality of contact portions 56c that come into contact with the first surface F1 of the medium ME0 and a shaft portion 56d along the main scanning direction D1. The plurality of contact portions 56c are integrated with the shaft portion 56d and are rotatable about a center line of the shaft portion 56d together with the shaft portion 56d. The roller holding unit 40 includes a plurality of protruding portions 41 that protrudes in the feeding direction D3 on both sides of the contact portion 56c in the main scanning direction D1. One of the protruding portions 41 is provided with the reference marker adding unit 60.

The reference marker adding unit 60 includes the reference marker 62 having a cross shape in the reading range AR1 and the base portion 61 provided at the protruding portion 41. It can be said that the reference marker adding unit 60 includes the reference marker 62 indicating a reference of a landing position of the liquid droplet 37 onto the medium ME0 in the reading range AR1. The base portion 61 extends from the protruding portion 41 and is coupled to the reference marker 62 from the protruding portion 41. A tip end portion 61a of the base portion 61 is thinner than the reference marker 62. It can be said that a boundary portion between the base portion 61 and the reference marker 62 is thin. The vibration of the medium ME0 is transmitted to the reference marker 62 via the driven conveyance roller 56b, the roller holding unit 40, and the base portion 61. In addition, the vibration of the roller holding unit 40 may be transmitted to the medium ME0 via the driven conveyance roller 56b and may be transmitted to the reference marker 62 via the base portion 61.

The read unit 80 reads a state of the liquid droplet 37 landed on the medium ME0 in the reading range AR1 together with the reference marker 62. The control unit U1 executes adjustment processing based on the reading result RS0 with the reference marker 62 included in the reading result RS0 of the read unit 80 as a reference of a landing position. For example, by setting the center of the reference marker 62 included in the reading result RS0 as an origin (0,0) and setting a position of the dot 38, that is, a landing position of the liquid droplet 37 as coordinates (x, y), it is possible to accurately acquire the landing position of the liquid droplet 37. The dot 38 may be a dot included in the landing mark portion MA0 illustrated in FIGS. 2 to 5. In this case, the position of the landing mark portion MA0 can be accurately acquired.

FIG. 8 schematically illustrates the reading result RS0 including the dot 38 and the reference marker 62.

When relative vibration occurs between the medium ME0 and the read unit 80, the reading range AR1 with respect to the medium ME0 varies. As indicated by a rectangle of a solid line in FIG. 8, when a certain dot 38 is near the center of the reading range AR1, a reading result RS2 in which the dot 38 is near the center is obtained by the read unit 80. As illustrated by a rectangle of a two-dot chain line in FIG. 8, when the reading range AR1 is deviated to the upper left with reference to a certain dot 38, the dot 38 included in the reading result RS1 is deviated to the lower right. Here, since the reference marker adding unit 60 is provided at the roller holding unit 40 that receives the vibration transmitted to the medium ME0, the reference marker 62 included in the reading result RS1 is also deviated to the lower right. As a result, the coordinates (x, y) of the dot 38 with reference to the origin (0,0) are substantially matched between the reading result RS1 and the reading result RS2. As illustrated by a rectangle of a one-dot chain line in FIG. 8, when the reading range AR1 is deviated to the lower right with reference to a certain dot 38, the dot 38 included in the reading result RS3 is deviated to the upper left. Here, since the reference marker adding unit 60 is provided at the roller holding unit 40 that receives the vibration transmitted to the medium ME0, the reference marker 62 included in the reading result RS3 is also deviated to the upper left. As a result, the coordinates (x, y) of the dot 38 with reference to the origin (0,0) are substantially matched between the reading result RS3 and the reading result RS2.

Since the reference marker 62 has a cross shape, it is easy to specify an x coordinate in the main scanning direction D1 and a y coordinate in the sub scanning direction D2 in the reading result RS0. It can be said that it is easy to specify a position of the reference marker 62 included in the reading result RS0. In addition, since a portion between the base portion 61 and the reference marker 62 is thinner than the reference marker 62, it is easy to specify the origin (0,0) which is the center of the reference marker 62. Therefore, the landing position of the liquid droplet 37 with reference to the reference marker 62 can be accurately acquired, and the adjustment processing based on the reading result RS0 can be accurately executed.

The shape of the reference marker 62 may be a polygon such as a quadrangle, an ellipse including a circle, a rod, or the like. Further, even when the portion between the base portion 61 and the reference marker 62 is not thin, the landing position of the liquid droplet 37 with reference to the reference marker 62 can be acquired.

Further, the shaft portion 56d illustrated in FIG. 7 may be fixed to the protruding portion 41 in a manner that the shaft portion 56d cannot rotate, or may rotatably hold one or more contact portions 56c as the rollers 5.

Further, the roller 5 may be the driven ejection roller 57b, the drive conveyance roller 56a, or the drive ejection roller 57a.

FIG. 9 schematically illustrates the adjustment processing of the printer 2. The adjustment processing is executed by the control unit U1 illustrated in FIG. 1. When the print system 1 includes the host device HO1, the host device HO1 may mainly execute the adjustment processing. Instead, the controller 10 of the printer 2 may mainly execute the adjustment processing. In the following description, it is assumed that the controller 10 mainly executes the adjustment processing. In the adjustment processing illustrated in FIG. 9, steps S102 to S104 correspond to an intermediate image forming step ST1, step S106 corresponds to the reading step ST2, step S108 corresponds to a remaining image forming step ST3, and step S110 corresponds to the processing step ST4. Hereinafter, the description of "step" may be omitted, and signs of a step may be illustrated in parentheses. Print control processing of S102 to S108 start when the controller 10 receives a print instruction for forming the print image IM3 that is not a test pattern for adjustment. The print instruction may be an instruction caused by a print request from the host device HO1 to the printer 2, an instruction caused by a print start operation on the input unit 26 of the printer 2, or the like. The adjustment in S110 may be executed in response to the execution of the print control processing of S102 to S108, may be executed every predetermined period such as every month independently of the print control processing, or may be executed when the controller 10 receives an adjustment instruction. The adjustment instruction may be an instruction caused by an adjustment request from the host device HO1 to the printer 2, an instruction caused by an adjustment start operation on the input unit 26 of the printer 2, or the like.

Hereinafter, the adjustment processing will be described with reference to FIGS. 1 to 8.

When the adjustment processing is started, the controller 10 decomposes the input image IM0 into the intermediate image IM1 and the remaining image IM2 (S102). First, based on the input image IM0, the controller 10 generates the intermediate image IM1 so as to include the landing mark portion MA0 that can be read by the read unit 80. The controller 10 may generate the intermediate image IM1 such that the dot 38 is not disposed at the landing position PO1 adjacent to the landing mark portion MA0 in the intermediate image IM1. As long as the state of the landing mark portion MA0 can be read by the read unit 80, the dot 38 may be disposed at the adjacent landing position PO1. Next, the controller 10 generates the remaining image IM2 by removing the arrangement of the dots 38 of the intermediate image IM1 from the arrangement of the dots 38 of the input image IM0.

After the input image IM0 is decomposed, the controller 10 controls the recording head 30 and the drive unit 50 such that the intermediate image IM1 including the landing mark portion MA0 is formed in the overlapping region OL1 in an intermediate pass of a plurality of passes, for example, in the first pass PA1 (S104). For example, as at the timing t1 illustrated in FIG. 3, the controller 10 moves the recording head 30 in the forward direction D11 while ejecting the liquid droplet 37 from the recording head 30 according to the band region B1 and the band region B2 serving as the overlapping region OL1. When the liquid droplet 37 ejected from the recording head 30 during the main scanning SC1 lands on the medium ME0, the controller 10 controls the sub scanning SC2 such that the liquid droplet 37 is ejected from the recording head 30 to the overlapping region OL1 in a subsequent pass, for example, in the second pass PA2. For example, the controller 10 controls the sub scanning SC2 so as to move the medium ME0 along the sub scanning direction D2 until the recording head 30 is aligned with the band regions B2 and B3, as at the timing t2 illustrated in FIG. 3.

As described above, the controller 10 executes control of forming the intermediate image IM1 including the landing mark portion MA0 on the medium ME0 based on the input image IM0 in the intermediate pass.

After the landing mark portion MA0 is formed, the read unit 80 reads the first surface F1 of the medium ME0 by imaging or the like in a state where the landing mark portion MA0 (see FIGS. 2 to 5) enters the reading range AR1 including the reference marker 62 (see FIGS. 6 to 8). Accordingly, the state of the landing mark portion MA0 is read together with the reference marker 62 in the reading range AR1, and the reference marker 62 and the landing mark portion MA0 are included in the reading result RS0 of the read unit 80. The controller 10 acquires the reading result RS0 including the reference marker 62 and the landing mark portion MA0 from the read unit 80 (S106).

Depending on the input image IM0, the landing mark portion MA0 may not be detected from the overlapping region OL1. In this case, the controller 10 may acquire the state of the landing mark portion MA0 from the read unit 80 in subsequent and following passes.

After acquiring the reading result RS0, the controller 10 controls the recording head 30 and the drive unit 50 to form the remaining image IM2 in the overlapping region OL1 in a subsequent pass, for example, in the second pass PA2 (S108). For example, as at the timing t3 illustrated in FIG. 3, the controller 10 moves the recording head 30 in the backward direction D12 while ejecting the liquid droplets 37 from the recording head 30 according to the band region B2 serving as the overlapping region OL1 and the band region B3. Accordingly, a peripheral region including the landing position PO1 adjacent to the landing mark portion MA0 is filled with the remaining image IM2, and the recording of the print image IM3 is completed in the overlapping region OL1.

The controller 10 repeatedly controls recording of the print image IM3 in the overlapping region OL1 while repeating the main scanning SC1 and the sub scanning SC2.

Thereafter, at an adjustment timing, the controller 10 executes the adjustment based on the state of the landing mark portion MA0 included in the reading result RS0 using the reference marker 62 included in the reading result RS0 as a reference of a landing position (S110), and ends the adjustment processing. For example, when the landing mark portion MA0 is the intersect pattern as illustrated in FIG. 2, the controller 10 acquires a y coordinate of the main scanning line LN1 in the sub scanning direction D2 and an x coordinate of the sub scanning line LN2 in the main scanning direction D1 with the center of the reference marker 62 as the origin (0,0) as illustrated in FIGS. 6 and 8 in the reading result RS0.

As illustrated in FIG. 10, the adjustment based on the state of the landing mark portion MA0 includes Bi-d adjustment, paper feeding adjustment (PF adjustment), density adjustment, and the like.

FIG. 10 schematically illustrates the adjustment based on the state of the landing mark portion MA0.

The Bi-d adjustment refers to setting of an adjustment value V1 for aligning a landing position of the liquid droplet 37 in a forward path and a landing position of the liquid droplet 37 in a backward path in the main scanning direction D1. The forward path refers to the main scanning SC1 in which the recording head 30 moves in the forward direction D11, and the backward path refers to the main scanning SC1 in which the recording head 30 moves in the backward direction D12. For example, it is assumed that the landing position in the backward path to be aligned with the landing position in the forward path in the main scanning direction D1 is deviated in the forward direction D11 from the landing position in the forward path, as illustrated in FIG. 10. In this case, an x coordinate of the sub scanning line LN2 formed on the medium ME0 in the backward path is deviated in the forward direction D11 from the x coordinate of the sub scanning line LN2 formed on the medium ME0 in the forward path. Since the x coordinate of the sub scanning line LN2 is acquired with reference to the reference marker 62 of the reference marker adding unit 60 provided at the holding unit 3 that receives the vibration transmitted to the medium ME0, an error is small. The controller 10 can accurately calculate the adjustment value V1 corresponding to a positional deviation of the sub scanning line LN2 based on the x coordinate of the sub scanning line LN2 with a small error. The controller 10 can execute the Bi-d adjustment by storing the adjustment value V1 in the storage unit 23 of the printer 2. For example, the controller 10 can delay an ejection timing of the liquid droplet 37 from the recording head 30 in the backward path according to the adjustment value V1 to align the landing position of the liquid droplet 37 in the forward path with that in the backward path in the main scanning direction D1. Of course, when the landing position in the backward path to be aligned with the landing position in the forward path in the main scanning direction D1 is deviated in the backward direction D12 from the landing position in the forward path, the landing position of the liquid droplet 37 in the forward path can be aligned with that in the backward path in the main scanning direction D1 by setting the adjustment value V1.

The preferable landing mark portion MA0 for the Bi-d adjustment may include the sub scanning line LN2 and may not include the main scanning line LN1. However, since the position of the landing mark portion MA0 in the main scanning direction D1 can be read even when there is no sub scanning line LN2 in the landing mark portion MA0, the Bi-d adjustment can be executed.

The PF adjustment refers to setting of an adjustment value V2 for adjusting a conveyance amount of the medium ME0 during the sub scanning SC2 in the sub scanning direction D2 without excess or deficiency. When a conveyance amount of the medium ME0 during the sub scanning SC2 is too large, a streak caused by a gap generated between band regions, for example, a light streak is generated, and when a conveyance amount of the medium ME0 during the sub scanning SC2 is too small, a streak caused by overlapping dots 38 between band regions, for example, a dark streak is generated. For example, it is assumed that an interval between landing positions of the liquid droplets 37 between the sub scanning SC2 in the sub scanning direction D2 is larger than a width WB of a design band region, as illustrated in FIG. 10. In this case, an interval between the main scanning line LN1 formed on the medium ME0 in a certain pass and the main scanning line LN1 formed on the medium ME0 in a previous pass is wider than the width WB of a band region. Since a y coordinate of the main scanning line LN1 is acquired with reference to the reference marker 62 of the reference marker adding unit 60 provided at the holding unit 3 that receives the vibration transmitted to the medium ME0, an error is small. The controller 10 can accurately calculate the adjustment value V2 corresponding to a deviation of an interval between the main scanning lines LN1 with respect to the width WB of a band region based on the y coordinate of the main scanning line LN1 with a small error. The controller 10 can execute the PF adjustment by storing the adjustment value V2 in the storage unit 23 of the printer 2. The controller 10 can adjust a conveyance amount of the medium ME0 during the sub scanning SC2 in the sub scanning direction D2 without excess or deficiency by reducing the conveyance amount of the medium ME0 during the sub scanning SC2 according to the adjustment value V2. Of course, when an interval between landing positions of the liquid droplets 37 between the sub scanning SC2 in the sub scanning direction D2 is smaller than the width WB of a design band region, the conveyance amount of the medium ME0 during the sub scanning SC2 can be adjusted without excess or deficiency by setting the adjustment value V2.

The preferable landing mark portion MA0 for the PF adjustment may include the main scanning line LN1 and may not include the sub scanning line LN2. However, since the position of the landing mark portion MA0 in the sub scanning direction D2 can be read even when there is no main scanning line LN1 in the landing mark portion MA0, the PF adjustment can be executed.

The density adjustment refers to setting of an adjustment value V3 for adjusting a density of the print image IM3 to a density of the input image IM0. The landing mark portion MA0 for the density adjustment may be a two-dimensional image such as a rectangle illustrated in FIG. 10, or may be a thin line in units of nozzles. Here, when relative vibration occurs between the medium ME0 and the read unit 80, the position of the landing mark portion MA0 varies in the reading range AR1. By including the reference marker 62 in the reading range AR1, it is possible to accurately specify the position of the landing mark portion MA0 with the reference marker 62 as a reference of a landing position.

For example, it is assumed that the print image IM3 is darker than the input image IM0 as illustrated in FIG. 10. In this case, an output density of the landing mark portion MA0 is larger than a density of landing mark portion data DAm for forming the landing mark portion MA0. The controller 10 can execute the density adjustment by storing the adjustment value V3 corresponding to a deviation of the output density of the landing mark portion MA0 with respect to the density of the landing mark portion data DAm in the storage unit 23 of the printer 2. For example, the controller 10 can adjust the density of the print image IM3 to the density of the input image IM0 by reducing the output density of the landing mark portion MA0 corresponding to the landing mark portion data DAm to the density of the landing mark portion data DAm according to the adjustment value V3. Of course, the density of the print image IM3 can be adjusted to the density of the input image IM0 by setting the adjustment value V3 even when the print image IM3 is lighter than the input image IM0.

As described above, a state of the landing mark portion MA0 included in the intermediate image IM1 formed in an intermediate pass is detected, and the print image IM3 in which the trace of the landing mark portion MA0 is removed by the remaining image IM2 formed in a subsequent pass is formed. While the print image IM3 which is not a test pattern is formed, processing based on the state of the landing mark portion MA0, for example, the Bid adjustment, the paper feeding adjustment, the density adjustment, and the like are executed. Since it is not necessary to separately print a test pattern for the adjustment of the printer 2, it is possible to reduce a liquid consumption amount, a medium consumption amount, and a printing time for printing the test pattern.

As illustrated in FIGS. 6 and 7, since the base portion 61 of the reference marker adding unit 60 is held by the roller holding unit 40, the vibration of the reference marker 62 with reference to the medium ME0 can be reduced, and a position error of the reference marker 62 with respect to the medium ME0 can be reduced. As a result, processing based on the reading result RS0 including the reference marker 62 with a small position error, for example, the Bi-d adjustment, the paper feeding adjustment, the density adjustment, and the like, is executed with the reference marker 62 as a reference of a landing position. Therefore, in the first specific example, it is possible to accurately execute the processing based on the reading result RS0 even when the relative vibration occurs between the medium ME0 and the read unit 80. In addition, since electric power is not required for the reference marker 62, the reference marker 62 can be semi-permanently read by the read unit 80.

### (5) Second Specific Example of Print System Including Reference Marker Adding Unit

FIG. 11 schematically illustrates a second specific example of the print system 1 including the reference marker adding unit 60 and the holding unit 3. A plan view of the reference marker adding unit 60 including the reference marker 62 present in the reading range AR1 including the dot 38 and the medium pressing unit 45 is illustrated in a region surrounded by a two-dot chain line illustrated in FIG. 11. In FIG. 11, elements that have already been described are denoted by reference numerals corresponding to the elements. In the second specific example, detailed description of elements described in the above example will be omitted.

As described above, the platen 58 holds the second surface F2 of the medium ME0 conveyed in the feeding direction D3. In the platen 58, the medium pressing units 45 and 45 are respectively attached to both edge portions 58a and 58a in the main scanning direction D1 intersecting the feeding direction D3 so as to wrap around edge portions E1 and E1 of the medium ME0 in the main scanning direction D1. Each medium pressing unit 45 presses the edge portion E1 of the medium ME0 from the first surface F1 toward the platen 58 so that the edge portion E1 does not float from the platen 58. The vibration of the platen 58 is transmitted to the medium ME0 and the medium pressing unit 45. It can be said that the vibration of the medium ME0 is transmitted to the medium pressing unit 45. In addition, the vibration of the medium pressing unit 45 may be transmitted to the medium ME0.

The reference marker adding unit 60 includes the cross-shaped reference marker 62 in the reading range AR1 and the base portion 61 provided at the medium pressing unit 45. The base portion 61 is coupled to the reference marker 62 from the medium pressing unit 45. A tip end portion 61a of the base portion 61 is thinner than the reference marker 62. The vibration of the medium ME0 is transmitted to the reference marker 62 via the medium pressing unit 45 and the base portion 61. In addition, the vibration of the medium pressing unit 45 may be transmitted to the medium ME0 and may be transmitted to the reference marker 62 via the base portion 61.

The read unit 80 reads a state of the liquid droplet 37 landed on the medium ME0 in the reading range AR1 together with the reference marker 62. The control unit U1 executes adjustment processing based on the reading result RS0 with the reference marker 62 included in the reading result RS0 of the read unit 80 as a reference of a landing position.

When relative vibration occurs between the medium ME0 and the read unit 80, the reading range AR1 with respect to the medium ME0 varies. Here, since the reference marker adding unit 60 is provided at the medium pressing unit 45 that receives the vibration transmitted to the medium ME0, even when a position of the dot 38 included in a reading result (for example, see the reading results RS1 to RS3 illustrated in FIG. 8) is deviated, the reference marker 62 included in the reading result is also deviated so as to substantially match the positional deviation of the dot 38.

Since the base portion 61 of the reference marker adding unit 60 is held by the medium pressing unit 45, the vibration of the reference marker 62 with reference to the medium ME0 can be reduced, and a position error of the reference marker 62 with respect to the medium ME0 can be reduced. As a result, processing based on the reading result RS0 including the reference marker 62 with a small position error, for example, the Bi-d adjustment, the paper feeding adjustment, the density adjustment, and the like, is executed with the reference marker 62 as a reference of a landing position. Therefore, in the second specific example, it is also possible to accurately execute the processing based on the reading result RS0 even when the relative vibration occurs between the medium ME0 and the read unit 80.

### (6) Third Specific Example of Print System Including Reference Marker Adding Unit

FIG. 12 schematically illustrates a third specific example of the print system 1 including the reference marker adding unit 60 and the holding unit 3. FIG. 13 is a plan view schematically illustrating the third specific example of the print system 1 including the reference marker adding unit 60 and the roller holding unit 40, the reference marker adding unit 60 including the reference marker 62 present in the reading range AR1 including the dots 38. In FIGS. 12 and 13, elements that have already been described are denoted by reference numerals corresponding to the elements. In the third specific example, detailed description of elements described in the above example will be omitted.

In the third specific example, the driven conveyance roller 56b is an example of the rotatable roller 5 that comes into contact with the medium ME0. The vibration of the medium ME0 is transmitted to the roller holding unit 40 via the driven conveyance roller 56b. In addition, the vibration of the roller holding unit 40 may be transmitted to the medium ME0 via the driven conveyance roller 56b. The holding unit 3 that receives the vibration transmitted to the medium ME0 includes the platen 58 and the roller holding unit 40 that rotatably holds the driven conveyance roller 56b. The roller holding unit 40 includes the plurality of protruding portions 41, and the reference marker adding unit 60 is provided at one of the protruding portions 41.

The reference marker adding unit 60 includes the emission unit 63 that can emit the light LT0 for displaying the cross-shaped reference marker 62 on the first surface F1 of the medium ME0 in the reading range AR1, and the base portion 61 provided at the protruding portion 41. It can be said that the reference marker adding unit 60 causes the reference marker 62 indicating a reference of a landing position of the liquid droplet 37 onto the medium ME0 to be displayed in the reading range AR1. The emission unit 63 includes a light source such as a semiconductor laser or a light emitting diode (LED), and a light passing portion having a cross slit through which the light LT0 from the light source passes so as to display the cross-shaped reference marker 62. The base portion 61 is coupled from the protruding portion 41 to the emission unit 63. The vibration of the medium ME0 is transmitted to the displayed reference marker 62 via the driven conveyance roller 56b, the roller holding unit 40, and the base portion 61. In addition, the vibration of the roller holding unit 40 may be transmitted to the medium ME0 via the driven conveyance roller 56b and may be transmitted to the displayed reference marker 62 via the base portion 61.

The shape of the reference marker 62 may be a polygon such as a quadrangle, an ellipse including a circle, a rod, or the like.

The read unit 80 reads a state of the liquid droplet 37 landed on the medium ME0 in the reading range AR1 together with the reference marker 62. The control unit U1 executes adjustment processing based on the reading result RS0 with the reference marker 62 included in the reading result RS0 of the read unit 80 as a reference of a landing position.

When relative vibration occurs between the medium ME0 and the read unit 80, the reading range AR1 with respect to the medium ME0 varies. Here, since the reference marker adding unit 60 is provided at the medium pressing unit 45 that receives the vibration transmitted to the medium ME0, even when a position of the dot 38 included in a reading result (for example, see the reading results RS1 to RS3 illustrated in FIG. 8) is deviated, the reference marker 62 included in the reading result is also deviated so as to substantially match the positional deviation of the dot 38.

Since the reference marker adding unit 60 is held by the roller holding unit 40, the vibration of the reference marker 62 displayed by the reference marker adding unit 60 follows the vibration of the medium ME0. Accordingly, the vibration of the reference marker 62 with reference to the medium ME0 can be reduced, and a position error of the reference marker 62 with reference to the medium ME0 can be reduced. As a result, processing based on the reading result RS0 including the reference marker 62 with a small position error, for example, the Bi-d adjustment, the paper feeding adjustment, the density adjustment, and the like, is executed with the reference marker 62 as a reference of a landing position. Therefore, in the third specific example, it is also possible to accurately execute the processing based on the reading result RS0 even when the relative vibration occurs between the medium ME0 and the read unit 80. In addition, distortion or the like of a member does not occur in the displayed reference marker 62. In addition, when there is a failure in the reference marker adding unit 60, the failure of the reference marker adding unit 60 is easily determined because the light LT0 is not emitted or the emitted light LT0 becomes weak.

### (7) Fourth Specific Example of Print System Including Reference Marker Adding Unit

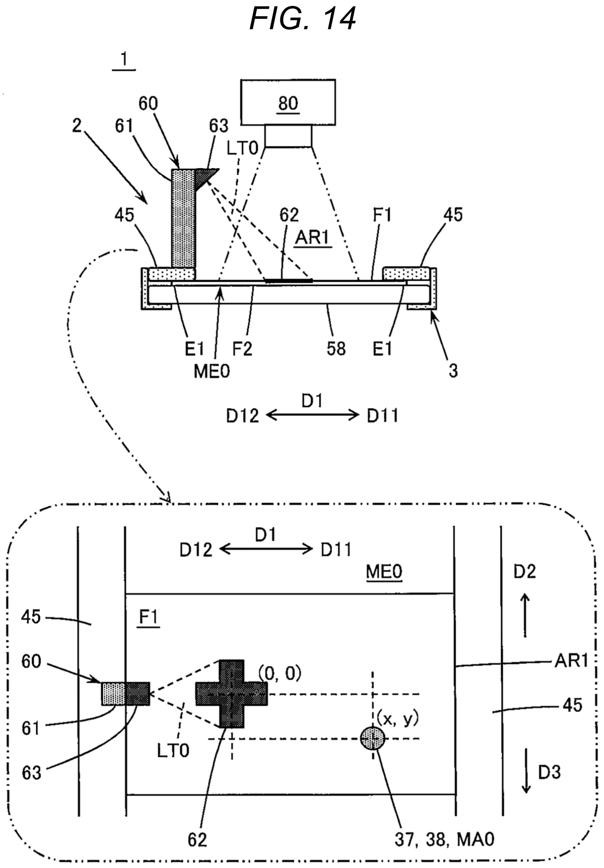

FIG. 14 schematically illustrates a fourth specific example of the print system 1 including the reference marker adding unit 60 and the holding unit 3. A plan view of the reference marker adding unit 60 including the reference marker 62 present in the reading range AR1 including the dot 38 and the medium pressing unit 45 is illustrated in a region surrounded by a two-dot chain line illustrated in FIG. 14. In FIG. 14, elements that have already been described are denoted by reference numerals corresponding to the elements. In the fourth specific example, detailed description of elements described in the above example will be omitted.

As described above, the medium pressing unit 45 presses the edge portion E1 of the medium ME0 in the main scanning direction D1 from the first surface F1 toward the platen 58. The reference marker adding unit 60 includes the emission unit 63 that can emit the light LT0 for displaying the cross-shaped reference marker 62 on the first surface F1 of the medium ME0 in the reading range AR1, and the base portion 61 provided at the medium pressing unit 45. The base portion 61 is coupled from the medium pressing unit 45 to the emission unit 63. The vibration of the medium ME0 is transmitted to the displayed reference marker 62 via the medium pressing unit 45. In addition, the vibration of the medium pressing unit 45 may be transmitted to the medium ME0 and may be transmitted to the displayed reference marker 62.

The read unit 80 reads a state of the liquid droplet 37 landed on the medium ME0 in the reading range AR1 together with the reference marker 62. The control unit U1 executes adjustment processing based on the reading result RS0 with the reference marker 62 included in the reading result RS0 of the read unit 80 as a reference of a landing position.

When relative vibration occurs between the medium ME0 and the read unit 80, the reading range AR1 with respect to the medium ME0 varies. Here, since the reference marker adding unit 60 is provided at the medium pressing unit 45 that receives the vibration transmitted to the medium ME0, even when a position of the dot 38 included in a reading result (for example, see the reading results RS1 to RS3 illustrated in FIG. 8) is deviated, the reference marker 62 included in the reading result is also deviated so as to substantially match the positional deviation of the dot 38.

Since the reference marker adding unit 60 is held by the medium pressing unit 45, the vibration of the reference marker 62 displayed by the reference marker adding unit 60 follows the vibration of the medium ME0. Accordingly, the vibration of the reference marker 62 with reference to the medium ME0 can be reduced, and a position error of the reference marker 62 with reference to the medium ME0 can be reduced. As a result, processing based on the reading result RS0 including the reference marker 62 having a small position error is executed with the reference marker 62 as a reference of a landing position. Therefore, in the fourth specific example, it is also possible to accurately execute the processing based on the reading result RS0 even when the relative vibration occurs between the medium ME0 and the read unit 80.

### (8) Fifth Specific Example of Print System Including Reference Marker Adding Unit

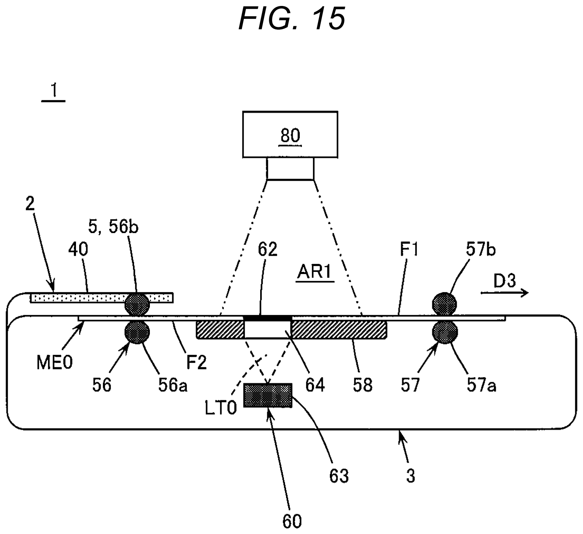

FIG. 15 schematically illustrates a fifth specific example of the print system 1 including the reference marker adding unit 60 and the holding unit 3. In FIG. 15, elements that have already been described are denoted by reference numerals corresponding to the elements. In the fifth specific example, detailed description of elements described in the above example will be omitted.

As described above, the platen 58 holds the second surface F2 of the medium ME0 conveyed in the feeding direction D3. It is assumed that the medium ME0 in the fifth specific example can transmit the light LT0 in a thickness direction of the medium ME0. The platen 58 illustrated in FIG. 15 has a hole 64 penetrating the platen 58 in a thickness direction. A shape of the hole 64 is a shape of the displayed reference marker 62, for example, a cross shape. The holding unit 3 is provided with the emission unit 63 that can emit the light LT0 to the second surface F2 of the medium ME0 through the hole 64. When the emission unit 63 emits the light LT0 to the second surface F2 of the medium ME0 through the hole 64, the reference marker 62 is displayed on the first surface F1 of the medium ME0 by the light LT0 transmitted through the medium ME0. In the fifth specific example, it can be said that the reference marker adding unit 60 includes the emission unit 63 and the hole 64. Since the reference marker 62 having a shape corresponding to a shape of the hole 64 is displayed at a position of the hole 64, it can be said that the reference marker adding unit 60 is provided at the platen 58. It can be said that the reference marker adding unit 60 displays the reference marker 62 on the first surface F1 of the medium ME0 in the reading range AR1 by emitting the light LT0 to the second surface F2 of the medium ME0 through the hole 64. The vibration of the platen 58, which receives the vibration transmitted to the medium ME0, is transmitted to the displayed reference marker 62.

The read unit 80 reads a state of the liquid droplet 37 landed on the medium ME0 in the reading range AR1 together with the reference marker 62. The control unit U1 executes adjustment processing based on the reading result RS0 with the reference marker 62 included in the reading result RS0 of the read unit 80 as a reference of a landing position.

When relative vibration occurs between the medium ME0 and the read unit 80, the reading range AR1 with respect to the medium ME0 varies. Here, since the reference marker adding unit 60 is provided at the platen 58 that receives the vibration transmitted to the medium ME0, even when a position of the dot 38 included in a reading result (for example, see the reading results RS1 to RS3 illustrated in FIG. 8) is deviated, the reference marker 62 included in the reading result is also deviated so as to substantially match the positional deviation of the dot 38.

Since the reference marker adding unit 60 is provided at the platen 58, the vibration of the reference marker 62 displayed by the reference marker adding unit 60 follows the vibration of the medium ME0. Accordingly, the vibration of the reference marker 62 with reference to the medium ME0 can be reduced, and a position error of the reference marker 62 with reference to the medium ME0 can be reduced. As a result, processing based on the reading result RS0 including the reference marker 62 having a small position error is executed with the reference marker 62 as a reference of a landing position. Therefore, in the fifth specific example, it is also possible to accurately execute the processing based on the reading result RS0 even when the relative vibration occurs between the medium ME0 and the read unit 80.

The emission unit 63 provided in the holding unit 3 may emit the light LT0 for displaying the reference marker 62 that is smaller than the hole 64. Since the emission unit 63 of the reference marker adding unit 60 is provided at the holding unit 3 that receives the vibration transmitted to the medium ME0, it is possible to accurately execute the processing based on the reading result RS0 even when the relative vibration occurs between the medium ME0 and the read unit 80.

### (9) Sixth Specific Example of Print System Including Reference Marker Adding Unit

As illustrated in FIGS. 16 and 17, the emission unit 63 may be configured to change at least one of a size and a color of the reference marker 62 to be displayed. FIG. 16 schematically illustrates the emission unit 63 in a sixth specific example. The emission unit 63 illustrated in FIG. 16 may be applied to any specific example of the third specific example to the fifth specific example. FIG. 17 is a diagram schematically illustrating a reference marker table T1 in the sixth specific example. In FIGS. 16 and 17, elements that have already been described are denoted by reference numerals corresponding to the elements. In the sixth specific example, detailed description of elements described in the above example will be omitted.

The emission unit 63 illustrated in FIG. 16 includes a light source 63a, a toning unit 63b, and an irradiation size variable unit 63c. The light source 63a can emit a mixture of light of a red (R) component Ri, light of a green (G) component Gi, and light of a blue (B) component Bi. The light source 63a can include, for example, a red light source that emits the light of the R component Ri, a green light source that emits the light of the G component Gi, and a blue light source that emits the light of the B component Bi. The red light source, the green light source, and the blue light source may be integrated as one light emitting element. Examples of the light source 63a include a semiconductor laser, an LED, and the like. The toning unit 63b can change intensities of the R component Ri, the G component Gi, and the B component Bi according to an instruction from the controller 10. The irradiation size variable unit 63c can change a spread level of the light LT0 emitted from the light source 63a according to an instruction from the controller 10.

The reference marker table T1 illustrated in FIG. 17 represents a correspondence relationship between a size of the liquid droplet 37 ejected to a portion of the medium ME0 serving as the reading range AR1 and a size and a color of the reference marker 62. For example, it is assumed that the liquid droplet 37 has a large size for forming a large dot, a medium size for forming a medium dot, and a small size for forming a small dot. Of course, the large size is larger than the medium size, and the medium size is larger than the small size. The size of the reference marker 62 is a largest size when the liquid droplet 37 of a large size is ejected, is a smallest size when the liquid droplet 37 of a small size is ejected, and is a medium size when the liquid droplet 37 of a medium size is ejected. The color of the reference marker 62 is red when the liquid droplet 37 of a large size is ejected, is green when the liquid droplet 37 of a medium size is ejected, and is blue when the liquid droplet 37 of a small size is ejected.

When the liquid droplet 37 of a large size is ejected to the reading range AR1, the controller 10 controls the toning unit 63b to set the reference marker 62 to red and controls the irradiation size variable unit 63c to set the reference marker 62 to have a largest size according to the reference marker table T1. When the liquid droplet 37 of a medium size is ejected to the reading range AR1, the controller 10 controls the toning unit 63b to set the reference marker 62 to green and controls the irradiation size variable unit 63c to set the reference marker 62 to have a medium size according to the reference marker table T1. When the liquid droplet 37 of a small size is ejected to the reading range AR1, the controller 10 controls the toning unit 63b to set the reference marker 62 to blue and controls the irradiation size variable unit 63c to set the reference marker 62 to have a smallest size according to the reference marker table T1.

As described above, the control unit U1 controls the irradiation of the light LT0 from the reference marker adding unit 60 so as to change the size and the color of the reference marker 62 according to the size of the liquid droplet 37 ejected to the portion of the medium ME0 serving as the reading range AR1.

For example, in a case where the liquid droplet 37 of a large size is ejected to the reading range AR1, when the reference marker 62 is small, there is a possibility that it is difficult for the control unit U1 to recognize the reference marker 62 included in the reading range AR1. Since the reference marker 62 is large when the liquid droplet 37 of a large size is ejected to the reading range AR1, the control unit U1 can easily recognize the reference marker 62 included in the reading range AR1, and can easily acquire coordinates of a large dot with the reference marker 62 as a reference of a landing position. Since the reference marker 62 is red, the control unit U1 can grasp that a coordinate acquisition target is a large dot. In a case where the liquid droplet 37 of a small size is ejected to the reading range AR1, when the reference marker 62 is large, there is a possibility that it is difficult for the control unit U1 to recognize a small dot included in the reading range AR1. Since the reference marker 62 is small when the liquid droplet 37 of a small size is ejected to the reading range AR1, the control unit U1 can easily recognize the small dot included in the reading range AR1, and can easily acquire coordinates of the small dot with the reference marker 62 as a reference of a landing position. Since the reference marker 62 is blue, the control unit U1 can grasp that a coordinate acquisition target is a small dot.

As described above, it is possible to execute the processing based on the reading result RS0 according to the size of the liquid droplet 37 ejected to the portion of the medium ME0 serving as the reading range AR1.

Even when the color of the reference marker 62 does not change because the emission unit 63 does not include the toning unit 63b, the size of the reference marker 62 can be changed according to the size of the liquid droplet 37 ejected to the reading range AR1 because the emission unit 63 includes the irradiation size variable unit 63c. In addition, even when the size of the reference marker 62 does not change because the emission unit 63 does not include the irradiation size variable unit 63c, the color of the reference marker 62 can be changed according to the size of the liquid droplet 37 ejected to the reading range AR1 because the emission unit 63 includes the toning unit 63b.

Further, the emission unit 63 may include a reference marker shape changing unit that can change a shape of the reference marker 62 according to an instruction from the controller 10. The controller 10 may control the irradiation of the light LT0 from the reference marker adding unit 60 such that the shape of the reference marker 62 changes according to the size of the liquid droplet 37 ejected to the portion of the medium ME0 serving as the reading range AR1.

### (10) Seventh Specific Example of Print System Including Reference Marker Adding Unit

As illustrated in FIG. 18, the reference marker adding unit 60 may include the different color portion 65, which has a color different from that of the reference marker 62, around the reference marker 62. FIG. 18 is a plan view schematically illustrating a seventh specific example of the print system 1 including the reference marker adding unit 60 including the reference marker 62 present in the reading range AR1 including the dot 38. The reference marker adding unit 60 illustrated in FIG. 18 may be applied to any one of the first specific example and the second specific example. In FIG. 18, elements that have already been described are denoted by reference numerals corresponding to the elements. In the seventh specific example, detailed description of elements described in the above example will be omitted.

For example, in the example illustrated in FIG. 7, in a case where the ground color of the medium ME0 is white, when the reference marker 62 is not white, the reference marker 62 can be recognized from the reading result RS0. Here, in a case where the ground color of the medium ME0 is red, when the reference marker 62 is red, it is difficult to recognize the reference marker 62 from the reading result RS0.

The reference marker 62 illustrated in FIG. 18 has a circular shape, and a portion obtained by combining the reference marker 62 and the different color portion 65 in the reference marker adding unit 60 has a cross shape. For example, it is assumed that the reference marker 62 is red and the different color portion 65 is yellow. A ground color of the medium ME0 illustrated in an upper part of FIG. 18 is white, a ground color of a medium ME1 illustrated in the middle part of FIG. 18 is red, and a ground color of a medium ME2 illustrated in a lower part of FIG. 18 is yellow.

In the example illustrated in the upper part of FIG. 18, since both the reference marker 62 and the different color portion 65 have colors different from the ground color of the medium ME0, the reference marker 62 can be recognized from the reading result RS0. Even when a density of the dot 38 in the reading range AR1 is high, the reference marker 62 can be recognized from the reading result RS0 since a color of at least one of the reference marker 62 and the different color portion 65 is different from the color of the dots 38.

In the example illustrated in the middle part of FIG. 18, although the color of the reference marker 62 is the same as the ground color of the medium ME0, the reference marker 62 can be recognized from the reading result RS0 since the color of the different color portion 65 is different from the ground color of the medium ME0. Of course, even when a density of the dot 38 in the reading range AR1 is high, the reference marker 62 can be recognized from the reading result RS0.

In the example illustrated in the lower part of FIG. 18, although the color of the different color portion 65 is the same as the ground color of the medium ME0, the reference marker 62 can be recognized from the reading result RS0 since the color of the reference marker 62 is different from the ground color of the medium ME0. Of course, even when a density of the dot 38 in the reading range AR1 is high, the reference marker 62 can be recognized from the reading result RS0.

As described above, since the reference marker 62 has a color different from that of the surrounding different color portion 65, the reference marker can be easily specified from the reading result regardless of the color of the medium.

In the third specific example to the sixth specific example, when the reference marker adding unit 60 displays the reference marker 62 in the reading range AR1, the reference marker adding unit 60 may display a different color portion, which has a color different from that of the reference marker 62, around the reference marker 62. In this case, the reference marker can be easily specified from the reading result regardless of the color of the medium.

### (11) Eighth Specific Example of Print System Including Reference Marker Adding Unit

As illustrated in FIG. 19, the control unit U1 may control a color of the light LT0 from the reference marker adding unit 60 to a color different from the color of the medium ME0. FIG. 19 schematically illustrates reference marker color control processing in an eighth specific example. As illustrated in FIG. 16, the controller 10 controls the emission unit 63 that can change the color of the light LT0. The reference marker adding unit 60 controlled by the reference marker color control processing illustrated in FIG. 19 may be applied to any one of the third specific example to the sixth specific example. In the eighth specific example, detailed description of elements described in the above example will be omitted.

The reference marker color control processing starts, for example, when the control unit U1 receives setting of a type of the medium ME0. The host device HO1 stores information on the medium ME0 such as a ground color of the medium ME0 for each type of the medium ME0. The host device HO1 transmits information in which a type of the medium ME0 is associated with the ground color to the printer 2.

When the reference marker color control processing starts, the controller 10 acquires the information indicating the ground color associated with the type of the medium ME0 (S202). Next, the controller 10 determines a color of the light LT0 emitted from the emission unit 63 of the reference marker adding unit 60 based on the information indicating the ground color (S204). For example, when the ground color of the medium ME0 is white, the color of the light LT0 is determined to be a color different from white, such as red. When the ground color of the medium ME0 is red, the color of the light LT0 is determined to be a color different from red, such as yellow. When the ground color of the medium ME0 is green, the color of the light LT0 is determined to be a color different from green, such as white. When the ground color of the medium ME0 is yellow, the color of the light LT0 is determined to be a color different from yellow, such as green. Finally, the controller 10 controls the toning unit 63b so as to change the color of the light LT0 to the determined color, causes the light source 63a to emit the light LT0, and displays the reference marker 62 of the determined color on the first surface F1 of the medium ME0 in the reading range AR1 (S206).

For example, when the ground color of the medium ME0 is white, the reference marker 62 can be recognized from the reading result RS0 since the reference marker 62 is red. When the ground color of the medium ME0 is red, the reference marker 62 can be recognized from the reading result RS0 since the reference marker 62 is yellow.

As described above, by controlling the display color of the reference marker 62 to a color different from the color of the medium ME0, the reference marker 62 can be easily specified from the reading result RS0 regardless of the color of the medium ME0.

### (12) Modifications

Various modifications of the present disclosure are conceivable.

For example, a movement direction of the recording head 30 in the second pass PA2 may be the same as a movement direction of the recording head 30 in the first pass PA1. In this case, the movement direction of the recording head 30 in both passes (PA1 and PA2) may be the forward direction D11 or the backward direction D12.

The recording of the print image IM3 in the overlapping region OL1 may be executed in three or more passes.

Even in partial overlap printing in which the recording of the print image IM3 in the band regions B1 to B3 other than the overlapping region OL1 is executed in one pass, the adjustment such as the PF adjustment can be executed by forming the landing mark portion MA0 in the overlapping region OL1.

A subject that executes the processing described above is not limited to a CPU, and may be an electronic component other than a CPU, such as an ASIC. Of course, a plurality of CPUs may cooperate with one another to execute the processing described above, or the CPU and another electronic component (for example, ASIC) may cooperate with each other to execute the processing described above.

In the example described above, the coordinates (x, y) of the dot 38 with a center position of the reference marker 62 as the origin (0,0) are obtained, and the adjustment processing is executed based on the coordinates (x, y), but the execution of the processing with the reference marker 62 as a reference of a landing position is not limited to the example described above. For example, the control unit U1 may cut out, from the reading result RS0, a rectangular region of a predetermined range centered on the reference marker 62 and execute the adjustment processing such as the density adjustment based on the rectangular region.

The read unit 80 may be provided at the carriage 52. In this case, the reading range AR1 varies according to a movement of the carriage 52, the adjustment processing can be executed with the reference marker included in the reading result as a reference of a landing position by providing the reference marker 62 at a plurality of locations that can be regarded as the reading range AR1. For example, in the printer 2 illustrated in FIG. 2, the reference marker adding unit 60 may be provided at a plurality of the protruding portions 41. In addition, since there is a case where it is not necessary to perform adjustment in the entire region of the medium ME0 in the main scanning direction D1, even when the read unit 80 is provided at the carriage 52, the reference markers 62 may not be provided at a plurality of locations.

A housing of the printer 2 houses a frame member to which the platen 58 and the like are fixed. Since the vibration of the frame member is transmitted to the housing, the housing can also serve as the holding unit 3 that receives the vibration transmitted to the medium MEO. Therefore, the reference marker adding unit 60 may be provided at the housing.

### (13) Conclusions

As described above, according to various aspects of the present disclosure, it is possible to provide a configuration or the like capable of accurately executing processing based on a reading result even when relative vibration occurs between a medium and a read unit. Of course, basic functions and effects described above can also be achieved by configurations having only configuration requirements according to the independent claims.

It is possible to implement a configuration in which the elements disclosed in the examples described above are replaced with one another or the combinations thereof are changed, a configuration in which the elements disclosed in known technologies and the examples described above are replaced with one another or the combinations thereof are changed, and the like. The present disclosure also includes such configurations and the like.

## Claims

1. A print system comprising:
a recording head configured to eject a liquid droplet for forming a print image onto a medium;
a drive unit configured to change a relative positional relationship between the recording head and the medium;
a read unit configured to read a state of the liquid droplet landed on the medium in a reading range;
a control unit configured to control ejection of the liquid droplet from the recording head and execute processing based on a reading result of the read unit;
a holding unit configured to receive vibration transmitted to the medium; and
a reference marker adding unit provided at the holding unit and configured to display information indicating whether a reference marker falls within the reading range, the reference marker indicating a reference of a landing position of the liquid droplet onto the medium, wherein
the control unit executes the processing with the reference marker included in the reading result as the reference of the landing position.

2. The print system according to claim 1, wherein
the reference marker adding unit includes the reference marker in the reading range and a base portion that is provided at the holding unit and that is coupled to the reference marker.

3. The print system according to claim 2, wherein
the drive unit conveys the medium in a predetermined direction,
the print system further comprises a rotatable roller configured to come into contact with the medium movable in the predetermined direction,
the holding unit includes a roller holding unit that rotatably holds the roller, and
the base portion is coupled to the reference marker from the roller holding unit.

4. The print system according to claim 2, wherein
the drive unit conveys the medium in a predetermined direction,
the medium has a first surface on which the liquid droplet lands and a second surface opposite to the first surface,
the holding unit includes
a medium holding unit that holds the second surface, and
a medium pressing unit that presses an edge portion of the medium in a direction intersecting the predetermined direction from the first surface toward the medium holding unit, and
the base portion is coupled to the reference marker from the medium pressing unit.

5. The print system according to claim 1, wherein
the reference marker adding unit emits light for displaying the reference marker to a portion of the medium serving as the reading range.

6. The print system according to claim 5, further comprising:
a rotatable roller configured to come into contact with the medium, wherein
the medium has a first surface on which the liquid droplet lands and a second surface opposite to the first surface,
the holding unit includes
a medium holding unit that holds the second surface, and
a roller holding unit that rotatably holds the roller, and
the reference marker adding unit is provided at the roller holding unit or the medium holding unit.

7. The print system according to claim 5, wherein
the reference marker adding unit is configured to change at least one of a size and a color of the reference marker to be displayed, and
the control unit controls irradiation of the light from the reference marker adding unit such that at least one of the size and the color of the reference marker changes according to a size of the liquid droplet ejected to the portion of the medium serving as the reading range.

8. The print system according to claim 1, wherein
the reference marker has a cross shape.

9. The print system according to claim 1, wherein
the drive unit is configured to execute main scanning in which the relative positional relationship between the recording head and the medium is changed along a main scanning direction and sub scanning in which the relative positional relationship between the medium and the recording head is changed along a sub scanning direction intersecting the main scanning direction,
the control unit is configured to control the main scanning by the drive unit, control the sub scanning by the drive unit, control the ejection of the liquid droplet from the recording head, and complete recording of the print image by the main scanning of a plurality of passes, and
the control unit is further configured to
execute control to form an intermediate image including a landing mark portion readable by the read unit on the medium based on an input image in an intermediate pass among the plurality of passes, and
execute control to form a remaining image obtained by excluding the intermediate image in the print image on the medium in a pass after the intermediate pass,
determine a state of the landing mark portion with the reference marker included in the reading result as the reference of the landing position when the landing mark portion is included in the reading result, and
execute the processing based on the state of the landing mark portion.

10. The print system according to claim 9, wherein
the control unit determines an adjustment value for adjusting a feature of the print image based on the state of the landing mark portion, and adjusts the feature of the print image according to the adjustment value.

11. The print system according to claim 2, wherein
the reference marker adding unit includes a different color portion, which has a color different from a color of the reference marker, around the reference marker.

12. The print system according to claim 5, wherein
the reference marker adding unit is configured to change a color of the light, and
the control unit acquires information indicating a color of the medium and controls the color of the light from the reference marker adding unit to a color different from the color indicated by the information.

13. A control method of a print system,
the print system including
a recording head configured to eject a liquid droplet for forming a print image onto a medium,
a drive unit configured to change a relative positional relationship between the recording head and the medium, and
a read unit configured to read a state of the liquid droplet landed on the medium in a reading range,
the print system being configured to control ejection of the liquid droplet from the recording head and execute processing based on a reading result of the read unit,
the print system further including
a holding unit configured to receive vibration transmitted to the medium, and
a reference marker adding unit provided at the holding unit and configured to display information indicating whether a reference marker falls within the reading range, the reference marker indicating a reference of a landing position of the liquid droplet onto the medium,
the control method comprising:
acquiring the reading result including the reference marker; and
executing the processing with the reference marker included in the reading result as the reference of the landing position.
